(19) Europäisches Patentamt
European Patent Office
Office européen des brevets

(11) **EP 4 443 383 A1**

(12) **EUROPEAN PATENT APPLICATION**
published in accordance with Art. 153(4) EPC

(43) Date of publication:
**09.10.2024 Bulletin 2024/41**

(21) Application number: **22898160.1**

(22) Date of filing: **24.06.2022**

(51) International Patent Classification (IPC):
**G06T 7/00** (2017.01)  **G06T 7/593** (2017.01)

(52) Cooperative Patent Classification (CPC):
**G06T 7/00; G06T 7/593**

(86) International application number:
**PCT/JP2022/025296**

(87) International publication number:
**WO 2023/095375 (01.06.2023 Gazette 2023/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.11.2021 JP 2021193622**

(71) Applicant: **Panasonic Intellectual Property
Management Co., Ltd.
Osaka-shi, Osaka 540-6207 (JP)**

(72) Inventors:
• **TERANISHI, Kensho
Kadoma-shi, Osaka 571-0057 (JP)**
• **MATSUNOBU, Toru
Kadoma-shi, Osaka 571-0057 (JP)**
• **YOSHIKAWA, Satoshi
Kadoma-shi, Osaka 571-0057 (JP)**
• **NADER, Georges
Singapore 469332 (SG)**
• **WU, Zheng
Singapore 469332 (SG)**
• **LASANG, Pongsak
Singapore 469332 (SG)**

(74) Representative: **Grünecker Patent- und
Rechtsanwälte
PartG mbB
Leopoldstraße 4
80802 München (DE)**

(54) **THREE-DIMENSIONAL MODEL GENERATION METHOD AND THREE-DIMENSIONAL MODEL GENERATION DEVICE**

(57)    A three-dimensional model generation method includes: obtaining subject information including a plurality of positions on a subject in a three-dimensional space; obtaining a first camera image of the subject from a first viewpoint and a second camera image of the subject from a second viewpoint; determining a search range in the three-dimensional space, including a first three-dimensional point on the subject corresponding to a first point in the first camera image, based on the subject information and without using map information that is generated by camera calibration executed by shooting the subject from a plurality of viewpoints and includes three-dimensional points each indicating a position on the subject in the three-dimensional space; performing matching for searching for a similar point that is similar to the first point, in a range in the second camera image corresponding to the search range; and generating a three-dimensional model using the search result.

FIG. 8

```
              Start
                |
  Receive frames and          S101
  camera parameters
                |
  Store frames and camera      S102
  parameters in storage
                |
  Obtain stored subject        S103
  information
                |
  Determine search range       S104
                |
  Search for similar point      S105
  by using search range
                |
  Generate three-dimensional    S106
  model by using search result
                |
  Output generated three-       S107
  dimensional model
                |
               End
```

**Description**

[Technical Field]

The present disclosure relates to a three-dimensional model generation method and a three-dimensional model generation device.

[Background Art]

Patent Literature (PTL) 1 discloses a technique of generating a three-dimensional model of a subject, using images obtained by shooting the subject from a plurality of viewpoints.

[Citation List]

[Patent Literature]

[PTL 1] Japanese Unexamined Patent Application Publication No. 2017-130146

[Summary of Invention]

[Technical Problem]

In the generating of three-dimensional models, there is a demand for improving three-dimensional model generation accuracy as well as reducing processing time.

The present disclosure provides a three-dimensional model generation method, etc., capable of improving three-dimensional model generation accuracy and shortening the processing time for the generating of three-dimensional models.

[Solution to Problem]

A three-dimensional model generation method according to an aspect of the present disclosure is a three-dimensional model generation method executed by an information processing device, and includes: obtaining subject information including a plurality of positions on a subject in a three-dimensional space; obtaining a first camera image of the subject shot from a first viewpoint and a second camera image of the subject shot from a second viewpoint; determining a search range in the three-dimensional space, based on the subject information and without using map information, the search range including a first three-dimensional point on the subject, the first three-dimensional point corresponding to a first point in the first camera image, the map information being generated by camera calibration executed by causing one or more cameras to shoot the subject from a plurality of viewpoints including the first viewpoint and the second viewpoint, the map information including three-dimensional points each indicating a position on the subject in the three-dimensional space; performing matching for searching for a similar point that is similar to the first point, in a range in the second camera image, the range corresponding to the search range; and generating a three-dimensional model using a search result in the matching.

A three-dimensional model generation device according to an aspect of the present disclosure includes: a processor; and memory, wherein using the memory, the processor: obtains subject information including a plurality of positions on a subject in a three-dimensional space; obtains a first camera image of the subject shot from a first viewpoint and a second camera image of the subject shot from a second viewpoint; determines a search range on the three-dimensional space, based on the subject information and without using map information, the search range including a first three-dimensional point on the subject, the first three-dimensional point corresponding to a first point in the first camera image, the map information being generated by camera calibration executed by causing one or more cameras to shoot the subject from a plurality of viewpoints including the first viewpoint and the second viewpoint, the map information including three-dimensional points each indicating a position on the subject in the three-dimensional space; performs matching for searching for a similar point that is similar to the first point, in a range in the second camera image which corresponds to the search range; and generates a three-dimensional model using a search result in the matching.

A three-dimensional model generation device according to an aspect of the present disclosure includes: memory; and a processor coupled to the memory, wherein the processor: obtains a first camera image generated by shooting a subject in a three-dimensional space from a first viewpoint and a second camera image generated by shooting the subject from a second viewpoint; searches for a second point in a search range on an epipolar line identified by projecting, on the second camera image, a straight line that passes through the first viewpoint and a first point in the first camera image, the second point being similar to the first point; and generates a three-dimensional model of the subject based on a result of the search, the search range is provided based on a position of a first three-dimensional point, in the three-dimensional space, that corresponds to the first point, and the position is calculated based on a reflected wave of an electromagnetic wave emitted toward the subject.

It should be noted that the present disclosure may be implemented as a program that causes a computer to execute the steps included in the three-dimensional model generation method described above. Furthermore, the present disclosure may be implemented as a non-transitory computer-readable recording medium, such as a CD-ROM, having the above program recorded thereon. Furthermore, the present disclosure may be implemented as information, data, or signal representing the above program. In addition, the program, information, data, and signal may be distributed via a communication network such as the Internet.

[Advantageous Effects of Invention]

The present disclosure can provide a three-dimensional model generation method, etc., capable of improving three-dimensional model generation accuracy and shortening the processing time for the generating of three-dimensional models.

[Brief Description of Drawings]

[FIG. 1]

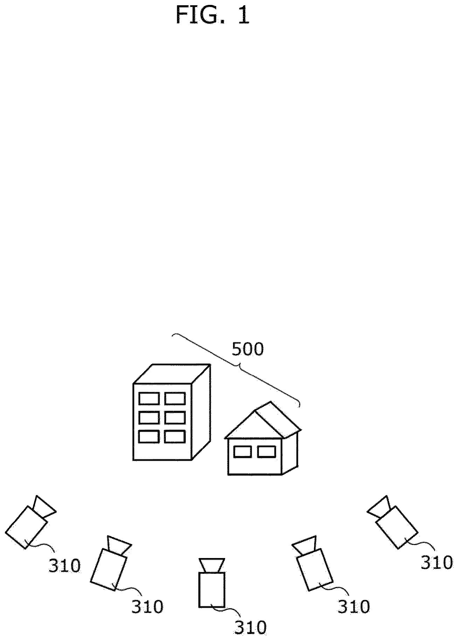

FIG. 1 is a diagram for describing an outline of a three-dimensional model generation method according to an embodiment.
[FIG. 2]

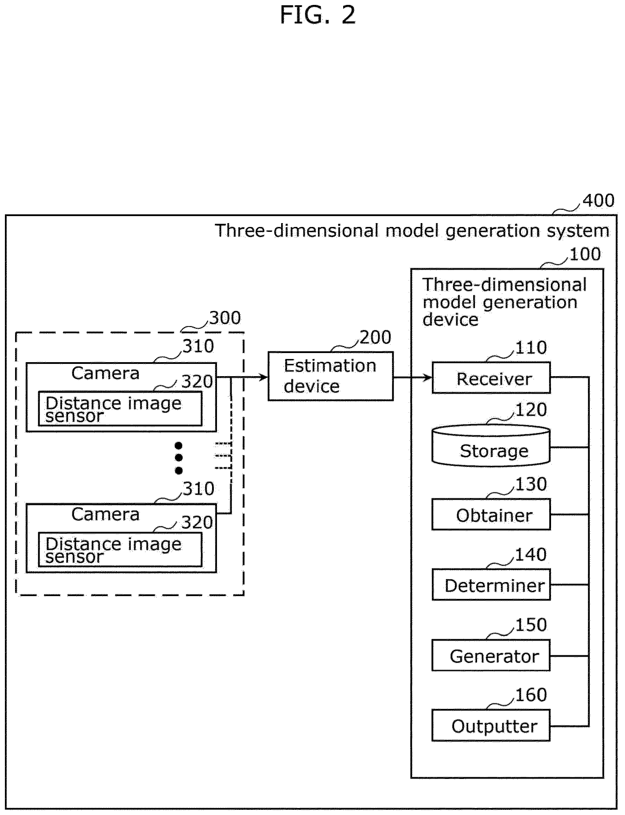

FIG. 2 is a block diagram illustrating the characteristic configuration of a three-dimensional model generation system according to the embodiment.
[FIG. 3]

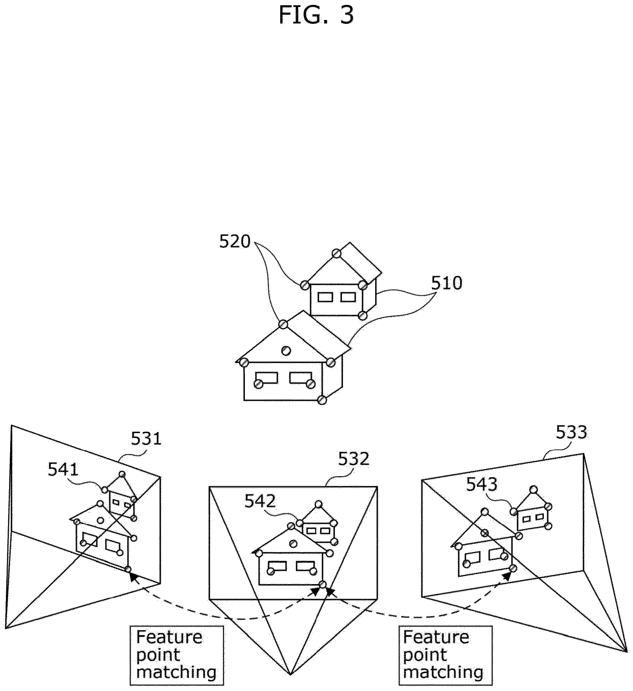

FIG. 3 is a diagram for describing camera calibration performed by an estimation device.
[FIG. 4A]

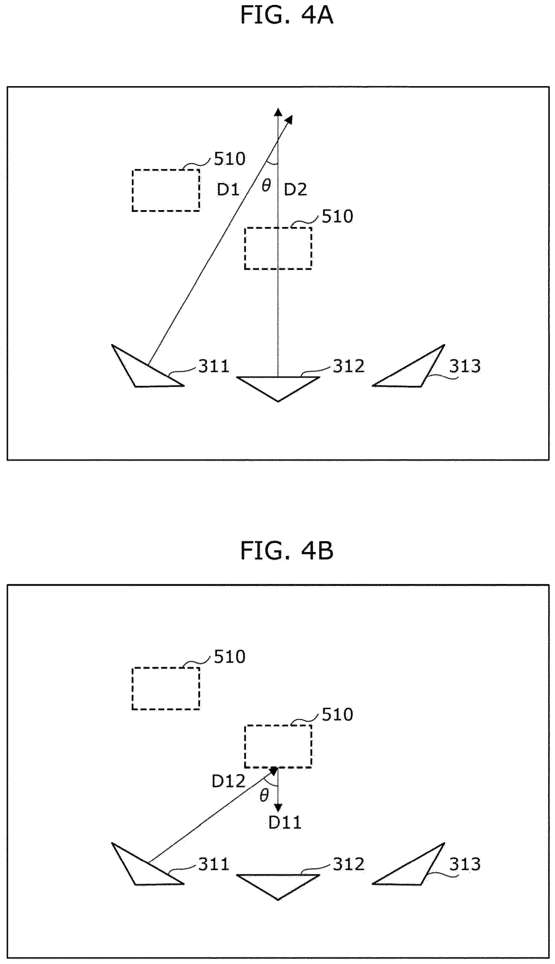

FIG. 4A is a diagram for describing a first example of a process of selecting a target frame.
[FIG. 4B]
FIG. 4B is a diagram for describing a second example of a process of selecting a target frame.
[FIG. 4C]

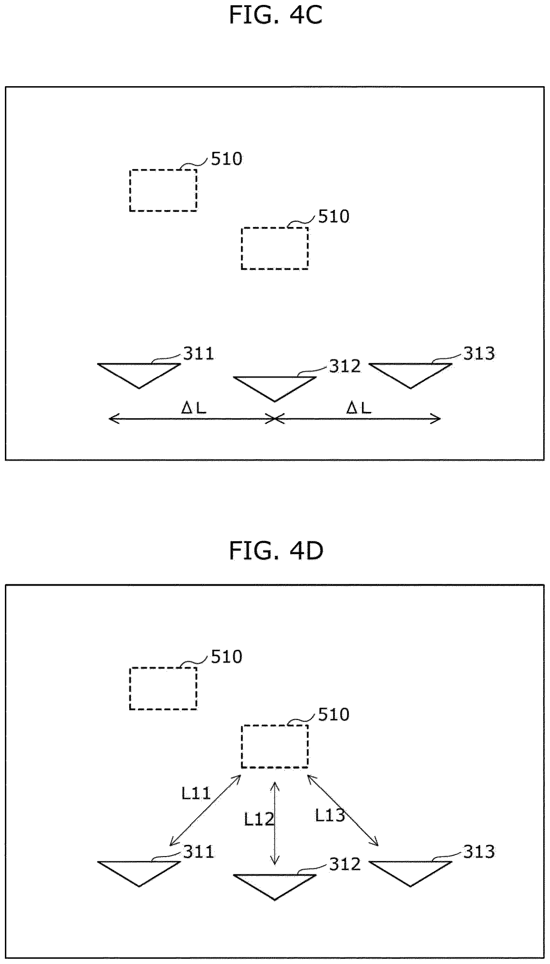

FIG. 4C is a diagram for describing a third example of a process of selecting a target frame.
[FIG. 4D]
FIG. 4D is a diagram for describing a fourth example of a process of selecting a target frame.
[FIG. 4E]

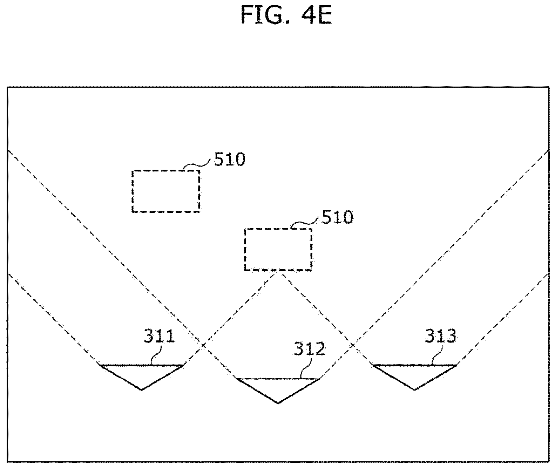

FIG. 4E is a diagram for describing a fifth example of a process of selecting a target frame.
[FIG. 5A]

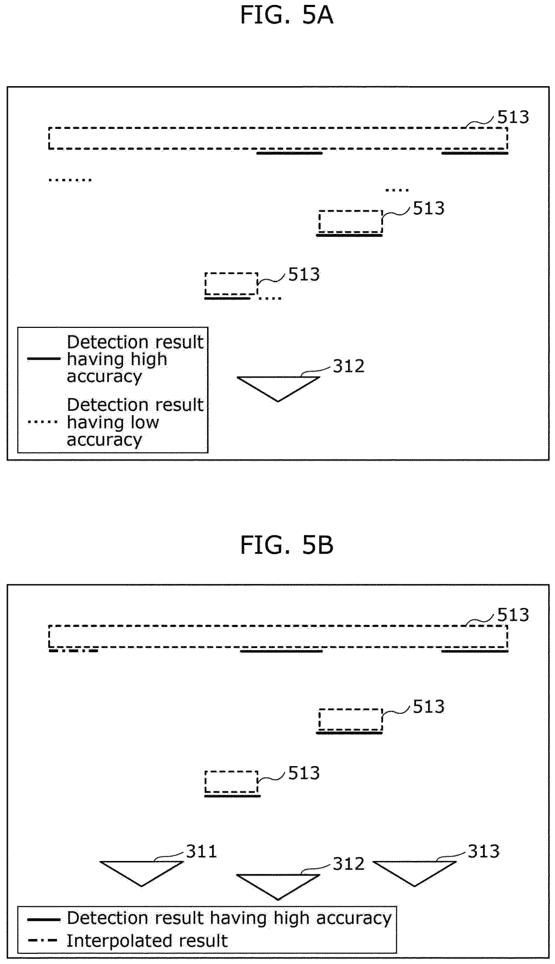

FIG. 5A is a diagram for describing a problem in a case where only first distance information is used.
[FIG. 5B]
FIG. 5B is a diagram illustrating an example of estimating a position of a first three-dimensional point by using second distance information.
[FIG. 6]

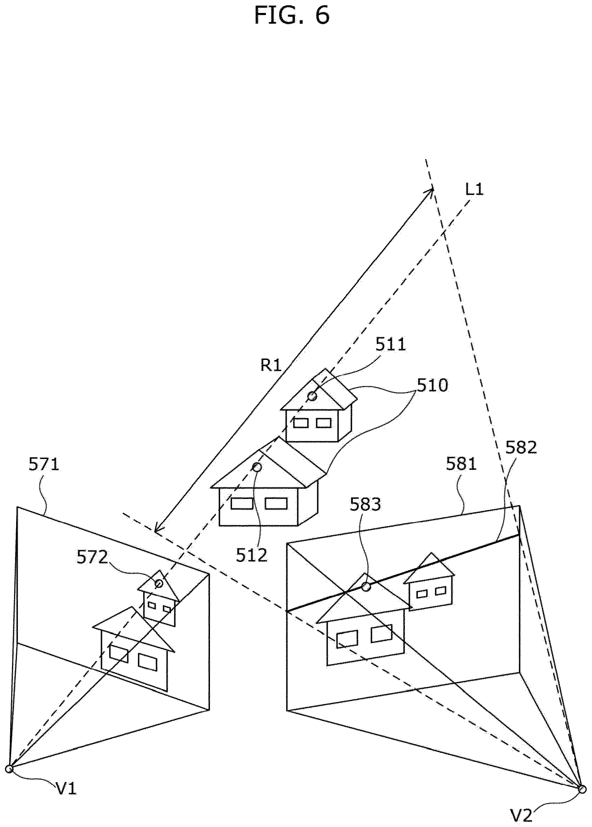

FIG. 6 is a diagram for describing matching processing in a case where a search range is not limited.
[FIG. 7]

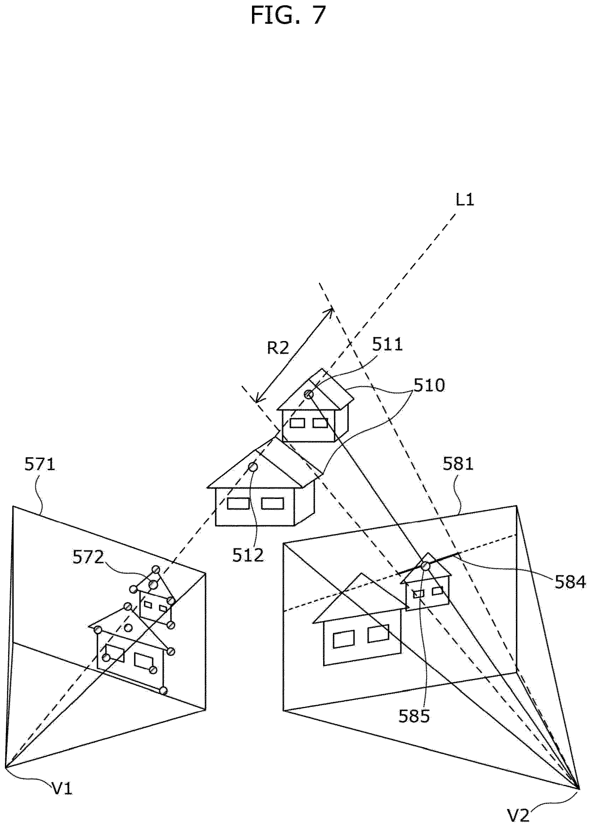

FIG. 7 is a diagram for describing matching processing in a case where a search range is limited.
[FIG. 8]

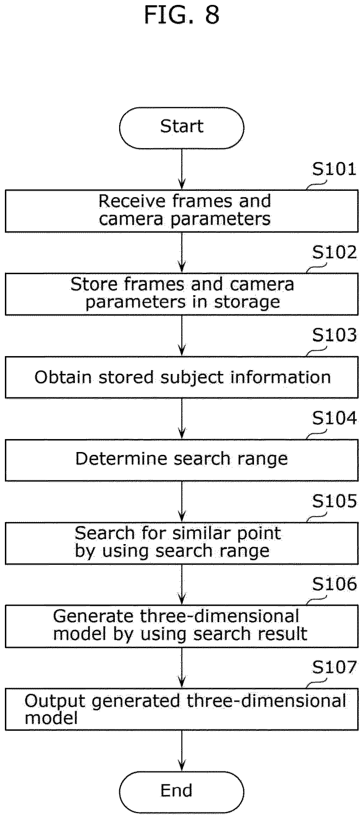

FIG. 8 is a flowchart illustrating an example of the operation of a three-dimensional model generation device.
[FIG. 9]

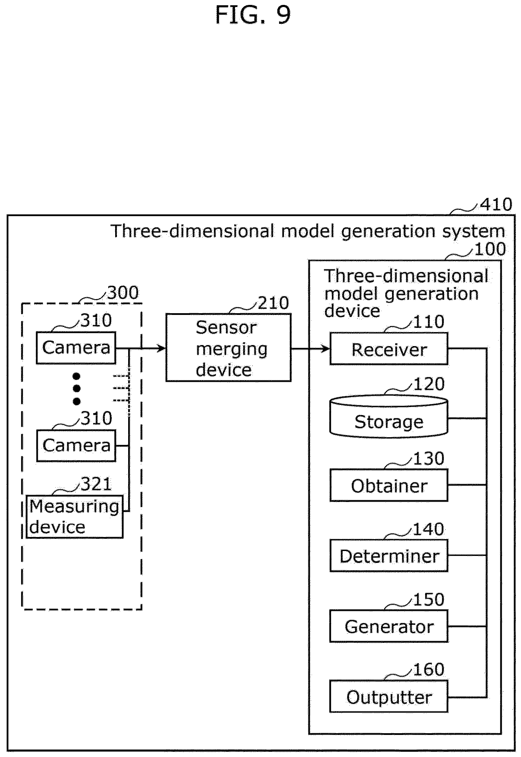

FIG. 9 is a block diagram illustrating the characteristic configuration of a three-dimensional model generation system according to Variation 1.
[FIG. 10]

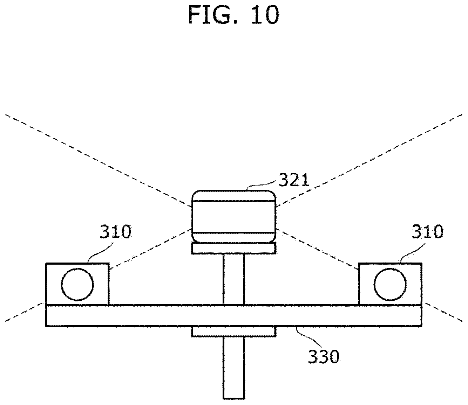

FIG. 10 is a diagram illustrating an example of the configuration of a camera group.
[FIG. 11]

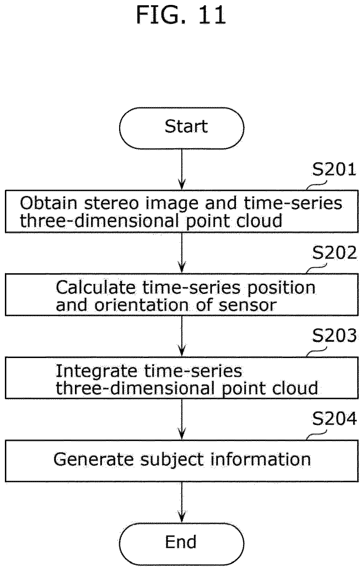

FIG. 11 is a flowchart illustrating an example of the operation of a sensor merging device according to Variation 1.
[FIG. 12]

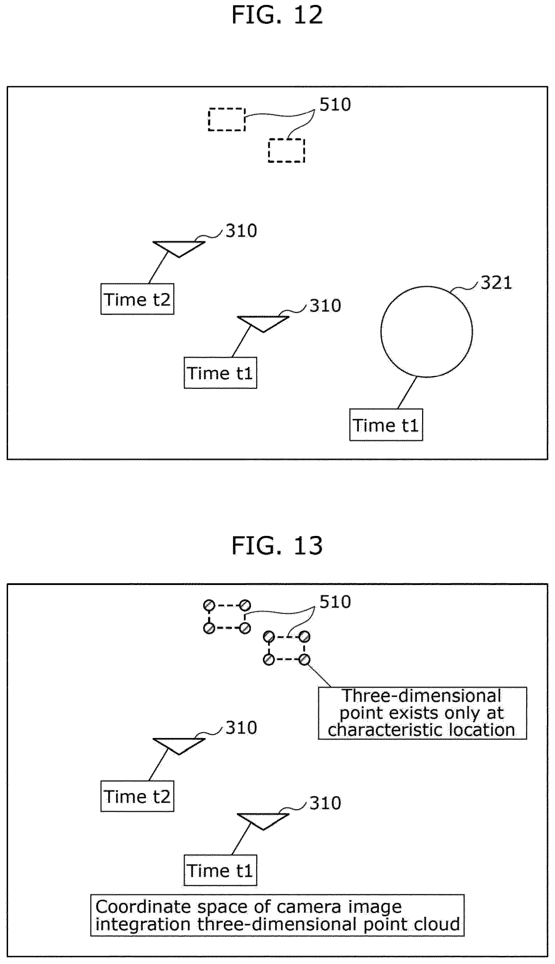

FIG. 12 is a diagram for describing an example of the movement of a sensor apparatus with respect to a subject.
[FIG. 13]
FIG. 13 is a diagram illustrating an example of a camera image integration three-dimensional point cloud.
[FIG. 14]

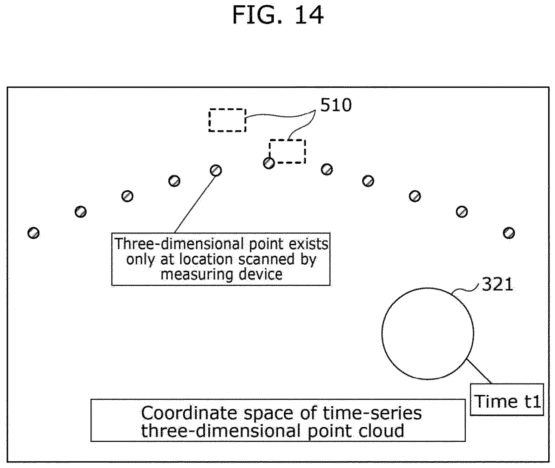

FIG. 14 is a diagram illustrating an example of a time-series three-dimensional point cloud.
[FIG. 15]

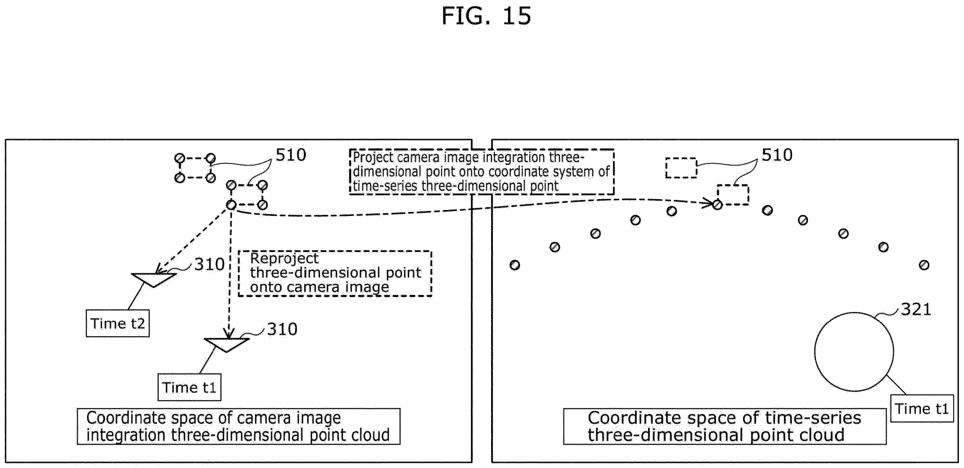

FIG. 15 is a diagram for describing integration of a camera image integration three-dimensional point cloud and a time-series three-dimensional point cloud.

[Description of Embodiments]

(Circumstances leading to the present disclosure)

In the technique disclosed in PTL 1, a three-dimensional model is generated by searching for a similar point between images. Typically, in the searching of a similar point, when a similar point of a single pixel of a single image is searched for from another image, an epipolar line on the other image is calculated from a geometric constraint of a camera, and searching for all pixels on the epipolar line is performed. For this reason, there is room for improvement in the similar point search processing speed. Furthermore, there is the problem that, when a similar subject is present on the epipolar line, the wrong similar point may be searched for, which, in such a case, leads to the deterioration of search accuracy. Furthermore, aside from on the epipolar line, there is also the problem that, when searching for a similar object in a search range such as the entirety of an image or a predetermined region, the wrong similar point may be searched for.
In view of this, the present disclosure provides a three-dimensional model generation method, etc., capable of improving three-dimensional model generation accuracy and shortening the processing time for the generating of three-dimensional models.
A three-dimensional model generation method according to an aspect of the present disclosure is a three-dimensional model generation method executed by an information processing device, and includes: obtaining subject information including a plurality of positions on a subject in a three-dimensional space; obtaining a first camera image of the subject shot from a first viewpoint and a second camera image of the subject shot from a second viewpoint; determining a search range in the three-dimensional space, based on the subject information and without using map information, the search range including a first three-dimensional point on the subject, the first three-dimensional point corresponding to a first point in the first camera image, the map information being generated by camera calibration executed by causing one or more cameras to shoot the subject from a plurality of viewpoints including the first viewpoint and the second viewpoint, the map information including three-dimensional points each indicating a position on the subject in the three-dimensional space; performing matching for searching for a similar point that is similar to the first point, in a range in the second camera image, the range corresponding to the search range; and generating a three-dimensional model using a search result in the matching.
Accordingly, the search range is determined based on subject information without using map information, and a similar point that is similar to a first point on the first camera image is searched for in a range that corresponds to a search range on the second camera image which is limited by the search range. In this manner, since the search for the similar point is performed in a range in which the similar point is highly likely to be present, based on the subject information, the similar point search accuracy can be improved and the time required for the search processing can be shortened. Therefore, the three-dimensional model generation accuracy can be improved, and the processing time for the three-dimensional model generation processing can be shortened.
Furthermore, for example, in the matching, an epipolar line in the second camera image may be limited to a length that is in accordance with the search range, and the similar point that is similar to the first point may be searched for on the epipolar line in the second camera image, the epipolar line corresponding to the first point.
Accordingly, since the similar point that is similar to the first point is searched for on an epipolar line that has been restricted to a length that is in accordance with the search range, the search accuracy of the similar point can be improved and the time needed for the search process can be shortened.
Furthermore, for example, the subject information may include a distance image generated according to measurement performed by a distance image sensor, the distance image may include a plurality of pixels each including distance information indicating distance from the distance image sensor to the subject, and, in the determining, the search range may be determined based on distance information included in a pixel, in the distance image, that corresponds to the first point.
Accordingly, since the subject information includes a distance image including a plurality of pixels that are associated with the plurality of pixels included in the first camera image, the distance information corresponding to the first point can be easily identified. For this reason, the position of the first three-dimensional point can be estimated based on the distance information identified, and the search range can be accurately determined.

Furthermore, for example, the subject information may include a plurality of distance images each generated according to measurement by a corresponding one of a plurality of distance image sensors. Each of the plurality of distance images may include a plurality of pixels each including distance information indicating distance from the distance image sensor that generated the distance image to the subject. The plurality of pixels included in each of the plurality of distance images may each be associated with a corresponding one of a plurality of pixels included in, among a plurality of camera images, a camera image corresponding to the distance image. The plurality of camera images may include the first camera image and the second camera image. In the determining, the search range may be determined based on one or more items of distance information included in one or more pixels in one or more distance images among the plurality of distance images, the one or more pixels each corresponding to the first point.

Accordingly, since the subject information includes a plurality of distance images each including a plurality of pixels that are associated with the plurality of pixels included in the first camera image, items of distance information corresponding to the first point can be easily identified. Since the items of distance information identified in the above manner are items of distance information that were obtained from different viewpoints, even when part of the items of distance information includes a detection error, the impact of the detection error can be reduced by utilizing the rest of the items of distance information. For this reason, the position of the first three-dimensional point can be more accurately estimated based on one or more items of distance information among the items of distance information, and the search range can be accurately determined.

Furthermore, for example, in the determining, when a detection accuracy of first distance information included in a pixel that is included in a first distance image and corresponds to the first point is lower than a predetermined accuracy, the search range may be determined using, as the one or more items of distance information, third distance information corresponding to the first point, the first distance image corresponding to the first camera image, the third distance information being calculated using two or more camera images other than the first camera image.

For this reason, when the detection accuracy of the first distance information is low, the search range can be determined using third distance information having high accuracy. Accordingly, the search range can be accurately determined.

Furthermore, for example, a position and an orientation of each of the plurality of distance image sensors may correspond to a position and an orientation of a corresponding one of a plurality of cameras including the one or more cameras, and the determining may include identifying, using the positions and the orientations of the plurality of cameras obtained through the camera calibration, the one or more pixels, in the one or more distance images, that each correspond to the first point.

For this reason, the one or more items of distance information can be identified using the position and orientation of the plurality of cameras obtained by camera calibration.

Furthermore, for example, the one or more distance images may include a first distance image corresponding to the first camera image and a second distance image corresponding to the second camera image, and the second camera image may be determined from the plurality of camera images in feature point matching in the camera calibration, based on a total number of feature points between the first camera image and each of the plurality of camera images other than the first camera image.

Accordingly, the second camera image on which similar point matching with the first camera image is to be performed is determined based on the number of feature points. For this reason, it is possible to identify second distance information for identifying one or more items of distance information that likely do not include an error, that is, one or more items of distance information that are highly accurate.

Furthermore, for example, the second camera image may be determined based on a difference in shooting orientation calculated from a first position-and-orientation of a camera that shot the first camera image at a time the first camera image was shot and a second position-and-orientation of a camera that shot the second camera image at a time the second camera image was shot.

Accordingly, the second camera image on which similar point matching with the first camera image is to be performed is determined based on the difference in camera orientation. For this reason, it is possible to identify second distance information for identifying one or more items of distance information that likely do not include an error, that is, one or more items of distance information that are highly accurate.

Furthermore, for example, the second camera image may be determined based on a difference in shooting position calculated from a first position-and-orientation of a camera that shot the first camera image at a time the first camera image was shot and a second position-and-orientation of a camera that shot the second camera image at a time the second camera image was shot.

Accordingly, the second camera image on which similar point matching with the first camera image is to be performed is determined based on the difference in camera position. For this reason, it is possible to identify second distance information for identifying one or more items of distance information that likely do not include an error, that is, one or more items of distance information that are highly accurate.

Furthermore, for example, a difference between a maximum value and a minimum value of the one or more items of distance information may be less than a first value.

Accordingly, the one or more items of distance information for which the difference between the maximum value and the minimum value is less than a first value can be identified. Accordingly, the one or more items of distance information that likely do not include an error, that is, the one or more items of distance information that are highly accurate can be identified.

Furthermore, for example, in the determining, the search range may be set to be wider as an accuracy of the one or more items of distance information is lower.

Accordingly, since the search range is widened as the accuracy of the one or more items of distance information is lower, it is possible to determine a search range that is in accordance with the accuracy.

Furthermore, for example, the accuracy may be higher as a total number of the one or more items of distance information is higher.

Accordingly, the accuracy of the one or more items of distance information can be judged as being higher as the total number of the one or more items of distance information is greater, that is, as there are more of the one or more items of distance information that are similar. Therefore, the search range can be narrowed as the total number of the one or more items of distance information is greater.

Furthermore, for example, the accuracy may be higher as a dispersion of the one or more items of distance information is smaller.

Accordingly, the accuracy of items of distance information can be judges as being higher as the dispersion of the items of distance information is smaller, that is, as the items of distance information are similar. Therefore, the search range can be narrowed as the dispersion of the items of distance information is smaller.

Furthermore, for example, the subject information may be generated based on sensor information of two or more types.

Accordingly, the subject information is generated based on two or more mutually different types of sensor information. In other words, subject information in which accuracy deterioration due to detection error has been reduced can be obtained.

Furthermore, for example, the sensor information of two or more types may include a plurality of two-dimensional images obtained from a stereo camera and three-dimensional data obtained from a measuring device that emits an electromagnetic wave and obtains a reflected wave which is the electromagnetic wave reflected by the subject.

Accordingly, since subject information is generated based on a plurality of two-dimensional images and three-dimensional data, three-dimensional generated by densification of three-dimensional data using the plurality of two-dimensional images can be accurately obtained.

A three-dimensional model generation device according to an aspect of the present disclosure includes: a processor; and memory. Using the memory, the processor: obtains subject information including a plurality of positions on a subject in a three-dimensional space; obtains a first camera image of the subject shot from a first viewpoint and a second camera image of the subject shot from a second viewpoint; determines a search range on the three-dimensional space, based on the subject information and without using map information, the search range including a first three-dimensional point on the subject, the first three-dimensional point corresponding to a first point in the first camera image, the map information being generated by camera calibration executed by causing one or more cameras to shoot the subject from a plurality of viewpoints including the first viewpoint and the second viewpoint, the map information including three-dimensional points each indicating a position on the subject in the three-dimensional space; performs matching for searching for a similar point that is similar to the first point, in a range in the second camera image which corresponds to the search range; and generates a three-dimensional model using a search result in the matching.

Accordingly, the search range is determined based on subject information without using map information, and a similar point that is similar to a first point on the first camera image is searched for in a range that corresponds to a search range on the second camera image which is limited by the search range. In this manner, since the search for the similar point is performed in a range in which the similar point is highly likely to be present, based on the subject information, the similar point search accuracy can be improved and the time required for the search processing can be shortened. Therefore, the three-dimensional model generation accuracy can be improved, and the processing time for the three-dimensional model generation processing can be shortened.

A three-dimensional model generation device according to an aspect of the present disclosure includes: memory; and a processor coupled to the memory. The processor: obtains a first camera image generated by shooting a subject in a three-dimensional space from a first viewpoint and a second camera image generated by shooting the subject from a second viewpoint; searches for a second point in a search range on an epipolar line identified by projecting, on the second camera image, a straight line that passes through the first viewpoint and a first point in the first camera image, the second point being similar to the first point; and generates a three-dimensional model of the subject based on a result of the search. Here, the search range is provided based on a position of a first three-dimensional point, in the three-dimensional space, that corresponds to the first point, and the position is calculated based on a reflected wave of an electromagnetic wave emitted toward the subject.

Accordingly, the search range is determined based on the position of the first three-dimensional point which is calculated based on the reflected wave of an electromagnetic wave, and a similar point that is similar to a first point on the first camera image is searched for in a range that corresponds to a search range on the second camera image which is limited by the search range. In this manner, since the search for the similar point is performed in a range in which the similar point is highly likely to be present, based on the subject information, the similar point search accuracy can be improved and the time required for the search processing can be shortened. Therefore, the three-dimensional model generation accuracy can be improved, and the processing time for the three-dimensional model generation processing can be shortened.

Furthermore, for example, the position may be calculated based on a distance image generated by a sensor that receives the reflected wave.

For this reason the position of the first three-dimensional point can be easily identified based on the distance image. Accordingly, the search range can be accurately determined.

Hereinafter, respective embodiments of a three-dimensional model generation method, etc., according to the present disclosure will be described in detail with reference to the drawings. It should be noted that each of the subsequently described embodiments shows a specific example of the present disclosure. Accordingly, numerical values, shapes, materials, structural components, the arrangement and connection of the structural components, steps, and the processing order of the steps, etc., shown in each of the following embodiments are merely examples, and are therefore not intended to limit the scope of the present disclosure.

Furthermore, the respective figures are not necessarily precise illustrations. In the figures, structural components that are substantially the same are assigned the same reference signs, and overlapping description thereof may be omitted or simplified.

[Embodiment]

[Outline]

First, referring to FIG. 1, the outline of a three-dimensional model generation method according to an embodiment will be described.

FIG. 1 is a diagram for describing the outline of the three-dimensional model generation method according to the embodiment. FIG. 2 is a block diagram illustrating the characteristic configuration of three-dimensional model generation system according to the embodiment.

In the three-dimensional model generation method, as illustrated in FIG. 1, the three-dimensional model of a predetermined region is generated from a plurality of images shot from a plurality of different viewpoints using a plurality of cameras 310. Here, the predetermined region is a region including a stationary static object or a moving mobile body such as a person, or both. In other words, the predetermined region is a region including, for example, at least one of a stationary static object or a moving mobile body as a subject.

As an example of the predetermined region including a static object and a mobile body, there is a venue where a sport game such as a basketball game is being held, a space on a road where a person or a vehicle exists, or the like. Note that the predetermined region may include not only a specific object to be used as a subject, but also scenery, etc. FIG. 1 illustrates a case where subject 500 is a building. Additionally, hereinafter, the predetermined region including not only a specific object to be used as a subject, but also scenery, etc., is also simply called the subject.

As illustrated in FIG. 2, three-dimensional model generation system 400 includes camera group 300 including a plurality of cameras 310, estimation device 200, and three-dimensional model generation device 100.

(Cameras)

Cameras 310 are imaging devices that shoot a predetermined area. Each of cameras 310 shoots a subject, and outputs a corresponding one of a plurality of shot frames to estimation device 200. The plurality of shot frames are also referred to as multi-viewpoint images. In Embodiment 1, two or more cameras 310 are included in camera group 300. Additionally, cameras 310 shoot the same subject from a plurality of mutually different viewpoints. A frame is, in other words, an image.

Note that, although it has been assumed that three-dimensional model generation system 400 includes camera group 300, three-dimensional model generation system 400 is not limited to this, and may include one camera 310. For example, in three-dimensional model generation system 400, by shooting at different timings while moving one camera 310, the one camera 310 may be caused to generate, for a subject that exists in a real space, multi-viewpoint images formed from a plurality of frames having mutually different viewpoints. In this case, each of the plurality of frames is associated with the position and orientation of camera 310 at the timing at which the frame was shot. Each of the plurality of frames is a frame shot (generated) by camera 310 that differs from the others in at least one of the position or orientation of camera 310. Cameras 310 that differ from each other in at least one of the position and orientation may be realized by a plurality of cameras 310 whose positions and orientations are fixed, may be realized by one camera 310 that is not fixed in at least one of the position and orientation, or may be realized by a combination of camera 310 whose position and orientation are fixed and camera 310 that is not fixed in at least one of the position and orientation.

Additionally, each camera 310 generates a camera image. A camera image has a plurality of pixels arranged in a two-dimensional manner. Each pixel of a camera image may have color information or luminance information as a pixel value. Additionally, each camera 310 may be a camera including distance image sensor 320. Distance image sensor 320 generates a distance image (depth map) by measuring the distance to a subject at the position of each pixel. A distance image has a plurality of pixels arranged in a two-dimensional manner. Each pixel of a distance image may have distance information that indicates the distance from camera 310 at the position corresponding to the pixel to the subject as a pixel value. A distance image is an example of subject information including a plurality of positions on the subject in a three-dimensional space.

In the present embodiment, each of cameras 310 is a camera including distance image sensor 320 that generates a distance image. That is, the positions and orientations of cameras 310 and the positions and orientations of distance image sensors 320 are in fixed corresponding relationships, respectively. Cameras 310 generate a camera image and a distance image as frames. A plurality of pixels of a camera image generated by each camera 310 may be associated with a plurality of pixels of a distance image generated by that camera 310, respectively.

Distance image sensor 320 may be a Time of Flight (ToF) camera. Furthermore, distance image sensor 320 may be a sensor which, like measuring device 321 described later in Variation 1, emits an electromagnetic wave and obtains a reflected wave which is the electromagnetic wave reflected by the subject, to thereby generate a distance image.

The resolution (number of pixels) of a camera image and the resolution (number of pixels) of a distance image may be the same, or may be different. When the resolution of a camera image is different from the resolution of a distance image, one pixel of the one with lower resolution of the camera image and the distance image may be associated with a plurality of pixels of the one with higher resolution.

Cameras 310 may generate camera images and distance images with the same resolution as each other, or may generate camera images and distance images with resolutions different from each other.

A camera image and a distance image may be output from camera 310 as an integrated image in which these are integrated. That is, an integrated image may be an image including a plurality of pixels, each having color information indicating the color of the pixel and distance information as pixel values.

Each of cameras 310 may be directly connected to estimation device 200 by wired communication or wireless communication, so as to be able to output the shot frames to estimation device 200, or may be indirectly connected to estimation device 200 via a hub, such as a communication equipment or a server, which is not illustrated.

Note that the frames shot with cameras 310, respectively, may be output to estimation device 200 in real time. Additionally, after the frames are once recorded in external storage devices, such as a memory or a cloud server, the frames may be output from these external storage devices to estimation device 200.

Additionally, cameras 310 may be fixed cameras such as surveillance cameras, respectively, may be mobile cameras such as video cameras, smart phones, or wearable cameras, or may be moving cameras such as drones with a shooting function.

(Estimation device)

Estimation device 200 performs camera calibration by causing one or more cameras 310 to shoot a subject from a plurality of viewpoints. Estimation device 200 performs the camera calibration that estimates the positions and orientations of cameras 310 based on, for example, a plurality of frames shot with cameras 310. Here, the orientation of camera 310 indicates at least one of the shooting direction of camera 310, or the inclination of camera 310. The shooting direction of camera 310 is the direction of the optical axis of camera 310. The inclination of camera 310 is the rotation angle around the optical axis of camera 310 from a reference orientation.

Specifically, estimation device 200 estimates camera parameters of cameras 310, based on a plurality of frames (camera images) obtained from cameras 310. Here, the camera parameters are parameters that indicates the characteristics of cameras 310, and include internal parameter including a focal point distance, an image center, etc. of camera 310, and external parameters indicating the position (more specifically, three-dimensional position) and orientation of camera 310. That is, the position and orientation of each of cameras 310 are obtained by estimating respective camera parameters.

Note that the estimation method of estimating, by estimation device 200, the positions and orientations of cameras 310 is not particularly limited. Estimation device 200 may estimate the positions and orientations of cameras 310 by using, for example, the Visual-SLAM (Simultaneous Localization and Mapping) technology. Alternatively, estimation device 200 may estimate the positions and orientations of cameras 310 by using, for example, the Structure-From-Motion technology.

Here, camera calibration by estimation device 200 will be described using FIG. 3.

As illustrated in FIG. 3, estimation device 200 performs searching for feature points by extracting characteristic points from frames 531 to 533 shot with cameras 310 as feature points 541 to 543, respectively, by using the Visual-SLAM technology or the Structure-From-Motion technology, and extracts a set of similar points that are similar between a plurality of frames among the extracted feature points 541 to 543. Since estimation device 200 can identify a point on subject 510 reflected in common in frames 531 to 533 by performing the searching for feature points, the three-dimensional coordinates of the point on subject 510 can be obtained with the principle of triangulation by using the set of the extracted similar points.

In this manner, estimation device 200 can estimate the position and orientation of each camera 310 by extracting a plurality of sets of similar points, and using the sets of similar points. In the process of estimating the position and orientation of each camera 310, estimation device 200 calculates three-dimensional coordinates for each set of similar points, and generates map information 520 including a plurality of three-dimensional points indicated by the plurality of calculated three-dimensional coordinates. Each of the plurality of three-dimensional points indicates the position on the subject in the three-dimensional space. Estimation device 200 obtains, as estimation results, the position and orientation of each camera 310, and the map information. Since the obtained map information is processed for optimization with the camera parameters, the obtained map information is information with higher accuracy than predetermined accuracy. Additionally, the map information includes the three-dimensional position of each of the plurality of three-dimensional points. Note that the map information may include not only the plurality of three-dimensional positions, but also the color of each three-dimensional point, the surface shape around each three-dimensional point, information indicating the frame from which each three-dimensional point is generated, etc.

Additionally, in order to increase the speed of the estimation processing, estimation device 200 may generate map information including a sparse three-dimensional point cloud by limiting the number of sets of similar points to a predetermined number. This is because estimation device 200 can estimate the position and orientation of each camera 310 with sufficient accuracy, even with the predetermined number of sets of similar points. Note that the predetermined number may be determined to be a number with which the position and orientation of each camera 310 can be estimated with sufficient accuracy. Additionally, estimation device 200 may estimate the position and orientation of each camera 310 by using sets that are similar at or above a predetermined degree of similarity among the sets of similar points. As a result, estimation device 200 can limit the number of sets of similar points used for the estimation processing to the number of sets that are similar at or above the predetermined similarity.

Additionally, based on, for example, the position and orientation of camera 310 estimated by using the above-described technology, estimation device 200 may calculate the distance between camera 310 and a subject as a camera parameter. Note that three-dimensional model generation system 400 may include a distance measurement sensor, and the distance between camera 310 and the subject may be measured by using the distance measurement sensor.

Estimation device 200 may be directly connected to three-dimensional model generation device 100 by wired communication or wireless communication, or may be indirectly connected to estimation device 200 via a hub, such as a communication equipment or a server, which is not illustrated. Accordingly, estimation device 200 outputs a plurality of frames received from cameras 310, and a plurality of estimated camera parameters of cameras 310 to three-dimensional model generation device 100.

Note that an estimation result by estimation device 200 may be output to three-dimensional model generation device 100 in real time. Additionally, after the estimation result is once recorded in external storage devices, such as a memory or a cloud server, the estimation result may be output from these external storage devices to three-dimensional model generation device 100.

Estimation device 200 includes at least a computer system that includes, for example, a control program, a processing circuit such as a processor or a logical circuit that executes the control program, and a recording device such as an internal memory or an accessible external memory storing the control program.

(Three-dimensional model generation device)

Three-dimensional model generation device 100 generates the three-dimensional model of a predetermined area, based on a plurality of frames shot with cameras 310, and an estimation result (position and orientation of each camera 310) of estimation device 200. Specifically, three-dimensional model generation device 100 is a device that performs three-dimensional model generation processing that generates the three-dimensional model of a subject in a virtual three-dimensional space, based on the respective camera parameters of cameras 310, and the plurality of frames.

Note that the three-dimensional model of the subject is data including the three-dimensional shape of the subject and the color of the subject that are restored in the virtual three-dimensional space from the frames obtained by shooting the actual subject. The three-dimensional model of the subject is a set of points indicating the respective three-dimensional positions of a plurality of points on the subject reflected to each of a plurality of camera images shot with a plurality of cameras 310 from multiple viewpoints, that is, a plurality of different viewpoints.

A three-dimensional position is represented by, for example, three-value information formed from a X component, a Y component, and a Z component that indicate the positions on an X-axis, a Y-axis, and a Z-axis that are orthogonal to each other, respectively. Note that a three-dimensional position is not limited to coordinates indicated on an orthogonal coordinate system, and may be coordinates indicated on a polar coordinate system. Note that the information included in a plurality of points indicating three-dimensional positions may include not only the three-dimensional positions (that is, information indicating coordinates), but also information indicating the color of each point, information representing the surface shapes of each point and its surrounding, etc.

Three-dimensional model generation device 100 includes at least a computer system that includes, for example, a control program, a processing circuit such as a processor or a logical circuit that executes the control program, and a recording device such as an internal memory or an accessible external memory storing the control program. Three-dimensional model generation device 100 is an information processing device. The function of each processing unit of three-dimensional model generation device 100 may be realized by software, or may be realized by hardware.

Additionally, three-dimensional model generation device 100 may store the camera parameters in advance. In this case, three-dimensional model generation system 400 need not include estimation device 200. Additionally, cameras 310 may be communicatively connected to three-dimensional model generation device 100 wirelessly or with wires.

Additionally, frames shot with cameras 310 may be directly output to three-dimensional model generation device 100. In this case, cameras 310 may be directly connected to three-dimensional model generation device 100 by wired communication or wireless communication, or may be indirectly connected to three-dimensional model generation device 100 via a hub, such as a communication equipment or a server, which is not illustrated.

[Configuration of three-dimensional model generation device]

Subsequently, referring to FIG. 2, the details of the configuration of three-dimensional model generation device 100 will be described.

Three-dimensional model generation device 100 is a device that generates a three-dimensional model from a plurality of frames. Three-dimensional model generation device 100 includes receiver 110, storage 120, obtainer 130, determiner 140, generator 150, and outputter 160.

Receiver 110 receives, from estimation device 200, frames shot with cameras 310, and an estimation result, including the position and orientation of each camera 310, generated by estimation device 200. By receiving the frames, receiver 110 obtains a first frame (first camera image and first distance image) of a subject shot from a first viewpoint, and a second frame (second camera image and second distance image) of the subject shot from a second viewpoint. That is, the frames received by receiver 110 include the first frame and the second frame. Receiver 110 outputs the received frames and estimation result to storage 120.

Receiver 110 is, for example, a communication interface for communicating with estimation device 200. When three-dimensional model generation device 100 and estimation device 200 perform wireless communication, receiver 110 includes, for example, an antenna and a wireless communication circuit. Alternatively, when three-dimensional model generation device 100 and estimation device 200 perform wired communication, receiver 110 includes, for example, a connector connected to a communication line, and a wired communication circuit. Note that receiver 110 may receive frames from cameras 310 without going through estimation device 200.

Storage 120 stores a plurality of frames and estimation results that are received by receiver 110. By storing a plurality of frames, storage 120 stores distance images which are included in the plurality of frames and are examples of subject information. Additionally, storage 120 stores a search range calculated by determiner 140. Note that storage 120 may store processing results of a processing unit included in three-dimensional model generation device 100. Storage 120 stores, for example, a control program for causing a processing circuit to execute processes executed by respective processing units included in three-dimensional model generation device 100. Storage 120 is realized by, for example, an HDD (Hard Disk Drive), flash memory, etc.

Obtainer 130 obtains, from storage 120, a plurality of frames, and the camera parameters of each camera 310 in the estimation result, which are stored in storage 120, and outputs them to determiner 140 and generator 150.

Note that three-dimensional model generation device 100 need not include storage 120 and obtainer 130. Additionally, receiver 110 may output, to determiner 140 and generator 150, the frames received from cameras 310, and the camera parameters of each camera 310 in the estimation result received from estimation device 200.

When the pixels of a camera image obtained by each camera 310 and the pixels of a distance image are not associated with each other, determiner 140 associates the pixels of the camera image and the pixels of the distance image. Note that, when the pixels of the camera image obtained by each camera 310 and the pixels of the distance image are associated with each other in advance, determiner 140 need not perform such process of association.

Determiner 140 determines, without using map information, the search range to be used for searching for a plurality of similar points between a plurality of frames, based on the subject information obtained from storage 120 by obtainer 130. The search range is a range in the three-dimensional space including a first three-dimensional point on a subject corresponding to a first point on a first frame. The search range can also be said to be a range in the three-dimensional space where the first three-dimensional point is likely to exist. Additionally, the search range is a range in the shooting direction from the first viewpoint with which the first frame is shot.

Note that the search range is used for searching a plurality of similar points between the first frame and the second frame in the range corresponding to the search range on the second frame that is different from the first frame among a plurality of frames. The second frame is a frame to be searched for a similar point between the first frame and the second frame. The searching of a similar point may be performed on frames that are different from the first frame among a plurality of frames. That is, the frame selected as the second frame is not limited to one frame, but may be a plurality of frames.

For example, determiner 140 may estimate the position of a first three-dimensional point based on first distance information included in the pixel corresponding to a first point in a first distance image included in the first frame, and may determine the search range based on the position of the estimated first three-dimensional point. For example, determiner 140 may determine, as the search range, a range that is equal to or less than a predetermined distance from the position of the estimated first three-dimensional point. Additionally, in order to more accurately estimate the position of the first three-dimensional point, determiner 140 may select one or more second frames that have the distance information corresponding to the position of the first three-dimensional point from a plurality of frames other than the first frame. That is, determiner 140 may estimate the position of the first three-dimensional point based on not only the first distance information, but also second distance information included in the pixel corresponding to the first point in a second distance image included in the second frame. Additionally, determiner 140 may determine a plurality of second frames from a plurality of frames, and may determine the search range based on a plurality of items of second distance information included in the pixels that each correspond to the first point and that are in the second distance images of the determined second frames, respectively. At this time, determiner 140 may determine the search range based on the items of second distance information, without using the first distance information. In this manner, determiner 140 may determine the search range based on one or more items of distance information included in one or more pixels that each correspond to the first point and that are in one or more distance images, respectively, in distance images. Note that, when estimating the position of the first three-dimensional point by using the second distance information, determiner 140 estimates the position of the first three-dimensional point by using converted second distance information that is obtained by converting the second distance information to the coordinate system of the first frame. The conversion of the coordinate system is performed based on the position and orientation of a camera from which the distance information before conversion is obtained, and the position and orientation of a camera from which the frame that is the conversion destination is obtained. One or more items of distance information may include the first distance information or the converted second distance information.

For example, when the distance between the position of the first three-dimensional point estimated based on the first distance information and the position of the first three-dimensional point estimated based on the second distance information converted to the coordinate system of the first frame is less than a predetermined threshold value, determiner 140 may estimate the middle point between the two positions as the position of the first three-dimensional point. When the above-described distance is equal to or more than the predetermined threshold value, determiner 140 need not estimate the position of the first three-dimensional point that is a reference for the search range.

Determiner 140 may identify, as one or more items of distance information, the distance information for which the difference between the maximum value and the minimum value is less than a first value, among items of distance information that each correspond to the first point and that are in distance images. Determiner 140 may estimate a representative value of one or more items of distance information as the position of the first three-dimensional point. That is, determiner 140 may determine the search range based on the representative value of one or more items of distance information. The representative value is, for example, an average value, a median, a maximum value, a minimum value, or the like. Note that, when there is a large variation in the one or more items of distance information, determiner 140 need not estimate the position of the first three-dimensional point. That is, in this case, determiner 140 need not determine the search range. The variation may be indicated by the distribution, standard deviation, or the like of one or more items of distance information. The case where there is a large variation in one or more items of distance information is, for example, the case where the distribution of the one or more items of distance information is greater than a predetermined distribution, or the case where the standard deviation of the one or more items of distance information is greater than a predetermined standard deviation. Note that determiner 140 identifies one or more pixels each corresponding to the first point by using the position and orientation of cameras 310 obtained by camera calibration.

Next, a process of selecting, from a plurality of frames, a target frame from which distance information corresponding to the position of a first three-dimensional point is to be obtained will be described with reference to FIG. 4A to FIG. 4E. FIG. 4A to FIG. 4E illustrate two subjects 510 and cameras 311, 312, and 313. Cameras 311, 312, and 313 are included in cameras 310. Here, camera 312 is a camera that generates a first frame that is a reference frame which serves as a reference in a search for a similar point.

FIG. 4A is a diagram for describing a first example of a process of selecting a target frame.

Determiner 140 may select, as a target frame, the frame shot by camera 311 that has a second position-and-orientation, the difference in shooting orientation between the first position-and-orientation of camera 312 at the time the first frame is shot and the second position-and-orientation being included in a first range. The target frame in the first example is also the second frame. For example, determiner 140 may select, as the target frame, the frame shot by camera 311 that performs shooting in shooting direction D1, the difference 0 between shooting direction D1 and shooting direction D2 of camera 312 being included in the first range as illustrated in FIG. 4A. The first range may be determined to be a range that has a common visual field with camera 312. That is, the first range may be determined to be a range in which the number of feature points between the first camera image of the first frame and the camera image of the target frame is a first number or more in the feature point matching in the camera calibration. For example, the first number may be a value larger than 1. In this manner, the second camera image of the second frame as the target frame may be determined based on the difference in shooting orientation calculated from the first position-and-orientation of the camera at the time the first camera image of the first frame is shot, and the second position-and-orientation of the camera that shot the second camera image.

FIG. 4B is a diagram for describing a second example of a process of selecting a target frame.

Determiner 140 may select, as the target frame, the frame shot by camera 311 satisfying that the angle difference between normal line direction D11 of a front surface of the subject at an arbitrary point on the subject and direction D12 to the arbitrary point is included in a second range as illustrated in FIG. 4B. In this case, determiner 140 need not select the first frame as the target frame. The second range may be defined to be an angular range where distance image sensor 320 can satisfactorily detect the distance to the front surface of the subject.

FIG. 4C is a diagram for describing a third example of a process of selecting a target frame.

Determiner 140 may select, as the target frame, the frame shot by camera 311 that has the second position-and-orientation, the difference in shooting position between the first position-and-orientation of camera 312 at the time the first frame is shot and the second position-and-orientation being included in a third range. The target frame in the third example is also the second frame. For example, determiner 140 may select, as the target frame, the frame shot by cameras 311, 313 that perform shooting at positions whose difference in distance ΔL from the position of camera 312 being included in the third range as illustrated in FIG. 4C. The third range may be determined to be a range that has a common visual field with camera 312. That is, the third range may be determined to be a range in which the number of feature points between the first camera image of the first frame and the camera image of the target frame is the first number or more in the feature point matching in the camera calibration. For example, the first number may be a value larger than 1. In this manner, the second camera image of the second frame as the target frame may be determined based on the difference in shooting position calculated from the first position-and-orientation of the camera at the time the first camera image of the first frame is shot, and the second position-and-orientation of the camera that shot the second camera image.

FIG. 4D is a diagram for describing a fourth example of a process of selecting a target frame.

Determiner 140 may select, as the target frame, the frame shot by camera 311 that has the second position-and-orientation, the second position-and-orientation being at a position distant from subject 510 by a distance, the difference between this distance and the distance between the first position-and-orientation of camera 312 at the time the first frame is shot and subject 510 being included in a fourth range. The target frame in the fourth example is also the second frame. For example, determiner 140 may select, as the target frame, the frame shot by cameras 311, 313 that perform shooting at positions distant from the subject by distances L11, L13, the difference between distances L11, L13 and distance L12 between camera 312 and the subject being included in the third range as illustrated in FIG. 4D. The fourth range may be determined to be a range that has a common visual field with camera 312. That is, the fourth range may be determined to be a range in which the number of feature points between the first camera image of the first frame and the camera image of the target frame is the first number or more in the feature point matching in the camera calibration. For example, the first number may be a value larger than 1.

FIG. 4E is a diagram for describing a fifth example of a process of selecting a target frame.

Determiner 140 may select, as the target frame, a frame having a large region in which the subject included in the first frame is shot in an overlapping manner as illustrated in FIG. 4E. For example, determiner 140 may select, as the target frame, a frame having a second number or more items of distance information corresponding to distance information whose difference from the first distance information at the first point in the first frame is a fifth value or less. The distance information corresponding to the distance information whose difference from the first distance information is the fifth value or less is the distance information that is converted to the coordinate system of the first frame by projecting the distance information corresponding to the first point of a frame to the first frame. Note that the distance information whose difference from the first distance information is the fifth value or less is called the distance information overlapping with the first distance information. Here, determiner 140 may compare the position, orientation and angle of view of camera 312 with the positions, orientations, and angles of view of cameras 311, 313, and may select, as the target frame, a frame shot by the camera whose overlapping shooting region exceeds a predetermined size.

Note that the first range, the third range, and the fourth range are determined to be ranges in which the number of feature points between the first camera image of the first frame and the camera image of the target frame is the first number or more in the feature point matching in the camera calibration. Therefore, it can be said that the target frame is determined from a plurality of camera images based on the number of feature points between the first camera image and the camera image of the target frame in the feature point matching.

Note that the positions and orientations of cameras 311 to 313 used for the processing of selecting the target frame by determiner 140 are identified by the camera parameters obtained by the camera calibration.

Note that determiner 140 may select a plurality of target frames, as long as the conditions for selecting the target frame described in the first to fifth examples are satisfied. In this case, determiner 140 may set a preferential order to the target frames that satisfy the conditions, and may select target frames in descending order of the preferential order, the upper limit for the number of the target frames being a third number. The third number is a number that is defined such that the load for the search processing of similar points between the first frame and the target frame is a predetermined load or less. The preferential order may be determined such that the closer to the position of the camera that shot the first frame, the higher the order, may be determined such that the closer the shooting direction of an arbitrary point on the subject is to the normal line direction at the arbitrary point, the higher the order, or may be determined such that the closer the distance from the subject is to the distance from the position of the camera that shot the first frame to the subject, the higher the order.

Determiner 140 determines the search range based on a representative value of one or more items of distance information on a straight line passing through the first viewpoint and the first three-dimensional point. Specifically, determiner 140 determines, as the search range, a range having a predetermined size centered at a position that is distant from camera 312 by the distance indicated by the representative value on the straight line. Additionally, specifically, determiner 140 obtains the distance from the first viewpoint to a point corresponding to the position of each pixel in the first frame on the subject, based on the first frame and the distance information obtained by projecting the distance information of a target frame corresponding to each pixel of the first frame to the first frame, and determines the size of the search range according to the obtained distance. The search range is a search range for searching for a point similar to the point of each pixel of the first frame from the second frame that is different from the first frame.

For the search range determined for each of pixels in a distance image, determiner 140 may increase the search range as the accuracy of one or more items of distance information for estimating the position of the first three-dimensional point decreases. Specifically, determiner 140 may determine that the accuracy of the one or more items of distance information is higher, the larger the number of the one or more items of distance information. It is highly likely that the one or more items of distance information are similar to each other, that is, the values are within a predetermined range. Therefore, the larger the number of the one or more items of distance information, the higher the accuracy can be determined. Additionally, determiner 140 may determine the accuracy of the one or more items of distance information such that the smaller the distribution of the one or more items of distance information, the higher the accuracy. Since it can be determined that the one or more items of distance information is similar to each other when the distribution is small, it can be determined that the smaller the distribution of the one or more items of distance information, the higher the accuracy of the one or more items of distance information. Note that the distance information may be determined to be more accurate, the higher the reflectance at the time when the distance information is obtained.

Here, a case where determiner 140 determines the search range based on the items of second distance information without using the first distance information will be described using FIG. 5A and FIG. 5B.

FIG. 5A is a diagram for describing a problem in a case where only the first distance information is used. FIG. 5B is a diagram illustrating an example of estimating the position of a first three-dimensional point by using the second distance information. FIG. 5A illustrates three subjects 513 and camera 312. FIG. 5B illustrates three subjects 513 and three cameras 311, 312, and 313. Here, camera 312 is a camera that generates a first frame that is a reference frame serving as a reference in a search for a similar point, and cameras 311, 313 are the other cameras. Additionally, thick solid lines in FIG. 5A indicate detection results having high accuracy by distance image sensor of camera 312, and thick broken lines in FIG. 5A indicates detection results having low accuracy by the distance image sensor. For example, a detection result having high accuracy (a detection result having a higher accuracy than a predetermined accuracy) may be a result detected with a reflectance that is equal to or more than a predetermined reflectance, and a detection result having low accuracy (a detection result having a lower accuracy than the predetermined accuracy) may be a result detected with a reflectance that is less than the predetermined reflectance. The reflectance is, for example, the ratio of intensity between an emitted electromagnetic wave and an obtained reflected wave.

As illustrated in FIG. 5A, the detection results by one camera 312 may include not only detection results having high accuracy, but also detection results having low accuracy. Therefore, when determiner 140 estimates the position of the first three-dimensional point by employing only the distance information obtained from the detection results having low accuracy, the accuracy of the position of the estimated first three-dimensional point becomes low, and a position different from an actual position may be estimated as the position of the first three-dimensional point.

On the other hand, as illustrated in FIG. 5B, there is a high possibility that any one of the detection results by three cameras 311, 312, and 313 is a detection result having high accuracy. This possibility increases as the number of cameras increases. Therefore, in FIG. 5A, instead of the distance information in a pixel including a detection result having low accuracy, it is possible to interpolate highly accurate detection calculated by using the detection results of cameras 311, 313 other than camera 312 that has generated the detection result.

For example, determiner 140 determines whether or not the accuracy of the first distance information of the first point detected by camera 312 is lower than a predetermined accuracy, and when determiner 140 determines that the accuracy of the first distance information is lower than the predetermined accuracy, determiner 140 may interpolate the distance information of the first point by replacing the first distance information with the third distance information. The third distance information is the distance information corresponding to the first point, and is calculated by using two camera images shot by cameras 311, 313. Determiner 140 may associate two pixels that each correspond to the first point and that are in the two camera images shot by cameras 311, 313 with each other, calculate the position of the first point by triangulation based on the two pixels and the respective positions and orientations of cameras 311, 313, and calculate the third distance information based on the position of the first point. In this manner, when the detection accuracy of the first distance information included in the pixel corresponding to the first point in the first distance image is lower than the predetermined accuracy, determiner 140 may determine the search range by using, as one or more items of distance information, the third distance information corresponding to the first point calculated by using two or more camera images other than the first camera image. Note that, when the accuracy of the generated third distance information is lower than the predetermined accuracy, determiner 140 may change the first frame used as a reference in a search for a similar point to other frames. That is, after the frame is changed, the search for the similar point is performed between the changed first frame and frames other than the changed first frame.

Additionally, for example, determiner 140 may determine whether or not the accuracy of the first distance information of the first point detected by camera 312 is lower than the predetermined accuracy, and when determiner 140 determines that the accuracy of the first distance information is lower than the predetermined accuracy, determiner 140 may interpolate the distance information of the first point by replacing the first distance information with first conversion information. The first conversion information is distance information obtained by performing coordinate conversion so as to project the second distance information of the first point detected by camera 311 to the detection result of camera 312. Additionally, in this case, determiner 140 may interpolate the distance information of the first point by replacing to the distance information calculated by using the second conversion information obtained by performing coordinate conversion so as to project the second distance information of the first point detected by camera 313 to the detection result of camera 312, and the first conversion information. In this manner, when the detection accuracy of the first distance information included in the pixel corresponding to the first point in the first distance image is lower than the predetermined accuracy, determiner 140 may determine the search range by using, as one or more items of distance information, the second distance information included in the pixel corresponding to the first point in the second distance image. Note that, when performing interpolation, distance information determined to be highly accurate is used for calculation of the distance information to be replaced.

Generator 150 generates a three-dimensional model of the subject based on a plurality of frames obtained from storage 120 by obtainer 130, the camera parameters, and the search range. Generator 150 searches for a similar point that is similar to a first point on the first frame in a range corresponding to the search range on other frames (for example, a second frame) different from the first frame. Generator 150 limits the epipolar line corresponding to the first point in the second frame to a length that is in accordance with the search range, and searches for a similar point that is similar to the first point on the epipolar line in the second frame. Generator 150 searches for a similar point from the second frame for each of a plurality of first pixels included in the first frame. As indicated by the following Equation 1, in the combinations of the first frame and the other frames except for the first frame, generator 150 calculates the Normalized Cross Correlation (NCC) between small regions as N (I,J), and generates matching information indicating a result of performing matching between frames.

Here, using FIG. 6 and FIG. 7, the advantages of limiting the search range will be specifically described. FIG. 6 is a diagram for describing matching processing in a case where a search range is not limited. FIG. 7 is a diagram for describing matching processing in a case where a search range is limited.

As illustrated in FIG. 6, when matching is performed on frame 581 in search range R1 without limitation for one pixel 572 in first frame 571, in frame 581, epipolar line 582 corresponding to straight line L1 passing through first viewpoint V1 and pixel 572 exists all the way from an end to the other end of frame 581. Note that first frame 571 is an image obtained at first viewpoint V1, and frame 581 is an image obtained at second viewpoint V2. Straight line L1 coincides with the shooting direction of camera 311 at first viewpoint V1. Pixel 572 corresponds to point 511 of subject 510. Therefore, searching for a pixel of frame 581 similar to pixel 572 is performed on epipolar line 582 without limitation. Thus, when there are two or more pixels having a feature similar to pixel 572 on epipolar line 582, pixel 583 corresponding to point 512, which is different from point 511 of subject 510, in frame 581, may be erroneously selected as a similar point. Accordingly, the generation accuracy of a three-dimensional model is deteriorated.

On the other hand, as illustrated in FIG. 7, search range R2 is determined to be a search range shorter than search range R1 illustrated in FIG. 6 by processing by determiner 140. Therefore, matching is performed on frame 581 in search range R2 with limitation for one pixel 572 in first frame 571, and in frame 581, epipolar line 584 corresponding to straight line L1 passing through first viewpoint V1 and pixel 572 becomes shorter than epipolar line 582 so as to match search range R2. Therefore, searching for a pixel of frame 581 that is similar to pixel 572 is performed in epipolar line 584, which is shorter than epipolar line 582. Thus, it is possible to reduce pixels having a feature similar to pixel 572, and it is possible to increase the possibility that pixel 585, which corresponds to point 511 of subject 510, in frame 581 is determined to be a similar point. Therefore, the generation accuracy of a three-dimensional model can be improved. Additionally, since the search range can be narrowed, the processing time for searching can be reduced.

Generator 150 generates a three-dimensional model by implementing triangulation using the position and orientation of each camera 310, and the matching information. Note that matching may be performed on all the combinations of two frames of a plurality of frames.

[Math. 1]

$$N(I,J) = \frac{\sum (I_{xy} - \overline{I_{xy}}) \cdot (J_{xy} - \overline{J_{xy}})}{\sqrt{(I_{xy} - \overline{I_{xy}})^2} \sqrt{(J - \overline{J_{xy}})^2}} \qquad \text{(Equation 1)}$$

Note that $I_{xy}$ and $J_{xy}$ are the pixel values in small regions of frame I and frame J. Additionally,

[Math. 2]

$$\overline{I_{xy}}$$

and

[Math. 3]

$$\overline{J_{xy}}$$

are the average values of the pixel values in the small regions of frame I and frame J, respectively.

Then, generator 150 generates a three-dimensional model by using a search result in the matching. Accordingly, generator 150 generates the three-dimensional model including three-dimensional points, the number of which is larger and the density of which is higher than the three-dimensional points included in the map information.

Outputter 160 outputs the three-dimensional model generated by generator 150. Outputter 160 includes, for example, an antenna, a communication circuit, a connector, etc. for communicatively connecting to a display device such as a display, which is not illustrated, by wires or wirelessly. Outputter 160 outputs an integrated three-dimensional model to the display device, so as to cause the display device to display the three-dimensional model.

[Operation of three-dimensional model generation device]

Next, the operation of three-dimensional model generation device 100 will be described by using FIG. 8. FIG. 8 is a flowchart illustrating an example of the operation of three-dimensional model generation device 100.

First, in three-dimensional model generation device 100, receiver 110 receives, from estimation device 200, a plurality of frames that have been shot by a plurality of cameras 310 and the camera parameters of each camera 310 (S101). Note that receiver 110 need not receive the frames and the camera parameters at 1 timing, and may receive each of them at different timings. That is, the first obtaining step and the second obtaining step may be performed at the same timing, or may be performed at different timings.

Next, storage 120 stores the frames shot by cameras 310 and the camera parameters of each camera 310 that are received by receiver 110 (S102).

Next, obtainer 130 obtains the subject information (distance images) from the frames stored in storage 120, and outputs the obtained subject information to determiner 140 (S103).

Determiner 140 determines a search range to be used for matching of a plurality of points between a plurality of frames, based on the subject information obtained by obtainer 130 (S104). The details of step S104 will be omitted, since the details of step S104 have been described in the description of the processing performed by determiner 140.

Next, generator 150 searches for a similar point that is similar to a first point on a first frame in the range corresponding to the search range on a second frame (S105), and generates a three-dimensional model based on the search result (S106). The details of step S105 and step S106 will be omitted, since the details of step S105 and step S106 have been described in the description of the processing performed by generator 150.

Then, outputter 160 outputs the three-dimensional model generated in generator 150 (S107).

[Advantageous effects, etc.]

The three-dimensional model generation method according to the present embodiment includes: obtaining subject information including a plurality of positions on a subject in a three-dimensional space (S103); obtaining a first camera image of the subject shot from a first viewpoint and a second camera image of the subject shot from a second viewpoint (S101); determining a search range in the three-dimensional space, based on the subject information and without using map information, the search range including a first three-dimensional point on the subject, the first three-dimensional point corresponding to a first point in the first camera image, the map information being generated by camera calibration executed by causing one or more cameras to shoot the subject from a plurality of viewpoints including the first viewpoint and the second viewpoint, the map information including three-dimensional points each indicating a position on the subject in the three-dimensional space (S104); performing matching for searching for a similar point that is similar to the first point, in a range in the second camera image, the range corresponding to the search range (S105); and generating a three-dimensional model using a search result in the matching (S106). The subject information is information obtained by camera calibration executed by causing one or more cameras to shoot a subject from a plurality of viewpoints, and is different from map information that includes three-dimensional points each indicating a position on the subject in a three-dimensional space.

According to the three-dimensional model generation method, the search range is determined based on the subject information without using map information, and a similar point that is similar to a first point on a first image is searched for in a range that corresponds to a search range on the second image which is limited by the search range. In this manner, since the search for the similar point is performed in a range in which the similar point is highly likely to be present, based on the subject information, the similar point search accuracy can be improved and the time required for the search processing can be shortened. Therefore, the three-dimensional model generation accuracy can be improved, and the processing time for the three-dimensional model generation processing can be shortened.

Furthermore, for example, in the searching (S105), an epipolar line in the second camera image is limited to a length that is in accordance with the search range, and the similar point that is similar to the first point is searched for on the epipolar line in the second camera image, the epipolar line corresponding to the first point.

Accordingly, since the similar point that is similar to the first point is searched for on an epipolar line that has been limited to a length that is in accordance to the search range, the search accuracy of the similar point can be improved and the time needed for the search processing can be shortened.

Furthermore, for example, the subject information includes a distance image generated according to measurement performed by a distance image sensor. The distance image includes a plurality of pixels each including distance information indicating distance from the distance image sensor to the subject. In the determining, the search range is determined based on distance information included in a pixel, in the distance image, that corresponds to the first point.

Accordingly, since the subject information includes a distance image including a plurality of pixels that are associated with the plurality of pixels included in the first camera image, the distance information corresponding to the first point can be easily identified. For this reason, the position of the first three-dimensional point can be estimated based on the distance information identified, and the search range can be accurately determined.

Furthermore, for example, the subject information includes a plurality of distance images each generated according to measurement by a corresponding one of a plurality of distance image sensors. Each of the plurality of distance images includes a plurality of pixels each including distance information indicating distance from the distance image sensor that generated the distance image to the subject. The plurality of pixels included in each of the plurality of distance images are each associated with a corresponding one of a plurality of pixels included in, among a plurality of camera images, a camera image corresponding to the distance image. The plurality of camera images include the first camera image and the second camera image. In the determining, the search range is determined based on one or more items of distance information included in one or more pixels in one or more distance images among the plurality of distance images, the one or more pixels each corresponding to the first point.

Accordingly, since the subject information includes a plurality of distance images each including a plurality of pixels that are associated with the plurality of pixels included in the first camera image, items of distance information corresponding to the first point can be easily identified. Since the items of distance information identified in the above manner are items of distance information that were obtained from different viewpoints, even when part of the items of distance information includes a detection error, the impact of the detection error can be reduced by utilizing the rest of the items of distance information. For this reason, the position of the first three-dimensional point can be more accurately estimated based on one or more items of distance information among the items of distance information, and the search range can be accurately determined.

Furthermore, for example, in the determining, when a detection accuracy of first distance information included in a pixel that is included in a first distance image and corresponds to the first point is lower than a predetermined accuracy, the search range is determined using, as the one or more items of distance information, third distance information corresponding to the first point, the third distance information being calculated using two or more camera images other than the first camera image. For this reason, when the detection accuracy of the first distance information is low, the search range can be determined using third distance information having high accuracy. Accordingly, the search range can be accurately determined.

Furthermore, for example, the positions and orientations of distance image sensors 320 correspond to the positions and orientations of cameras 310 which include one or more cameras. The plurality of distance images include a first distance image corresponding to the first camera image and a second distance image corresponding to the second camera image. In the determining, when the detection accuracy of first distance information included in a pixel corresponding to the first point in the first distance image is lower than a predetermined accuracy, the search range is determined using, as the one or more items of distance information, second distance information included in the pixel corresponding to the first point in the second distance image. For this reason, when the detection accuracy of the first distance information is low, the search range can be determined using the second distance information which has high accuracy. Accordingly, the search range can be accurately determined.

Furthermore, for example, a position and an orientation of each of the plurality of distance image sensors 320 corresponds to a position and an orientation of a corresponding one of a plurality of cameras 310 including the one or more cameras. The determining includes identifying, using positions and orientations of the plurality of cameras obtained through the camera calibration, the one or more pixels, in the one or more distance images, that each correspond to the first point.

For this reason, the one or more items of distance information can be identified using the position and orientation of the plurality of cameras obtained by camera calibration.

Furthermore, for example, the one or more distance images include a first distance image corresponding to the first camera image and a second distance image corresponding to the second camera image. The second camera image is determined from the plurality of camera images in feature point matching in the camera calibration, based on a total number of feature points between the first camera image and each of the plurality of camera images other than the first camera image.

Accordingly, the second camera image on which similar point matching with the first camera image is to be performed is determined based on the number of feature points. For this reason, it is possible to identify second distance information for identifying one or more items of distance information that likely do not include an error, that is, one or more items of distance information that are highly accurate.

Furthermore, for example, the second camera image is determined based on a difference in shooting orientation calculated from a first position-and-orientation of a camera that shot the first camera image at a time the first camera image was shot and a second position-and-orientation of a camera that shot the second camera image at a time the second camera image was shot.

Accordingly, the second camera image on which similar point matching with the first camera image is to be performed is determined based on the difference in camera orientation. For this reason, it is possible to identify second distance information for identifying one or more items of distance information that likely do not include an error, that is, one or more items of distance information that are highly accurate.

Furthermore, for example, the second camera image is determined based on a difference in shooting position calculated from a first position-and-orientation of a camera that shot the first camera image at a time the first camera image was shot and a second position-and-orientation of a camera that shot the second camera image at a time the second camera image was shot.

Accordingly, the second camera image on which similar point matching with the first camera image is to be performed is determined based on the difference in camera position. For this reason, it is possible to identify second distance information for identifying one or more items of distance information that likely do not include an error, that is, one or more items of distance information that are highly accurate.

Furthermore, for example, a difference between a maximum value and a minimum value of the one or more items of distance information is less than a first value.

Accordingly, the one or more items of distance information for which the difference between the maximum value and the minimum value is less than a first value can be identified. Accordingly, the one or more items of distance information that likely do not include an error, that is, the one or more items of distance information that are highly accurate can be identified.

Furthermore, for example, in the determining, the search range is set to be wider as an accuracy of the one or more items of distance information is lower.

Accordingly, since the search range is widened as the accuracy of the one or more items of distance information is lower, it is possible to determine a search range that is in accordance with the accuracy.

Furthermore, for example, the accuracy is higher as a total number of the one or more items of distance information is higher.

Accordingly, the accuracy of the one or more items of distance information can be judged as being higher as the total number of the one or more items of distance information is greater, that is, as there are more of the one or more items of distance information that are similar. Therefore, the search range can be narrowed as the total number of the one or more items of distance information is greater.

Furthermore, for example, the accuracy is higher as a dispersion of the one or more items of distance information is smaller.

Accordingly, the accuracy of items of distance information can be judges as being higher as the dispersion of the items of distance information is smaller, that is, as the items of distance information are similar. Therefore, the search range can be narrowed as the dispersion of the items of distance information is smaller.

[Variation 1]

Three-dimensional model generation system 410 according to the present variation will be described. In the present variation, a case of using subject information different from the subject information described in the embodiment will be described. That is, the subject information used in the present variation is different from a distance image.

FIG. 9 is a block diagram illustrating the characteristic configuration of a three-dimensional model generation system according to Variation 1.

Compared with three-dimensional model generation system 400 according to the embodiment, three-dimensional model generation system 410 according to the present variation is mainly different in that camera group 300 further includes measuring device 321, and sensor merging device 210 is included instead of estimation device 200. The same reference signs are assigned to components similar to those in three-dimensional model generation system 400 according to the embodiment, and description thereof is omitted.

FIG. 10 is a diagram illustrating an example of the configuration of a camera group.

As illustrated in FIG. 10, two cameras 310 and measuring device 321 that are included in camera group 300 are fixed to and supported by fixing component 330, so that the respective positions and orientations are in a fixed relationship. An apparatus including two cameras 310 and measuring device 321 in the fixed positional relationship relative to each other is called a sensor apparatus. Two cameras 310 constitute a stereo camera. Two cameras 310 synchronize with each other to perform shooting of images, and generate stereo images shot at the synchronized shooting time. The shooting time (timestamp) at which shooting has been performed is given to the generated stereo images. The stereo images are output to sensor merging device 210. Two cameras 310 may shoot stereo video.

Measuring device 321 emits an electromagnetic wave, and obtains a reflected wave that is the electromagnetic wave reflected by the subject, to thereby generate three-dimensional data. Specifically, measuring device 321 measures the time required for the emitted electromagnetic wave to return to measuring device 321 by being reflected by the subject after being emitted, and calculates the distance between measuring device 321 and a point on a front surface of the subject by using the measured time and the wave length of the electromagnetic wave. Measuring device 321 emits an electromagnetic wave from a reference point of measuring device 321 in a plurality of predetermined radial directions defined in advance. For example, measuring device 321 emits an electromagnetic wave at first angular intervals around the horizontal direction, and emits an electromagnetic wave at second angular intervals around the vertical direction. Therefore, measuring device 321 can calculate the three-dimensional coordinates of a plurality of points on the subject by detecting the distance between measuring device 321 and the subject in each of the directions around measuring device 321. Accordingly, measuring device 321 can calculate position information indicating a plurality of three-dimensional positions on the subject around measuring device 321, and can generate a three-dimensional model including the position information. The position information may be a three-dimensional point cloud including a plurality of three-dimensional points indicating a plurality of three-dimensional positions.

In the present embodiment, measuring device 321 is a three-dimensional laser measuring device including a laser irradiator (not illustrated) that irradiates laser light as an electromagnetic wave, and a laser receiver (not illustrated) that receives a reflected light that is the irradiated laser light reflected by the subject. Measuring device 321 scans the subject with laser light by rotating or oscillating a unit including the laser irradiator and the laser receiver on two different axes, or by installing a movable mirror (MEMS (Micro Electro Mechanical Systems) mirror) oscillated on two axes on the path of irradiated or received laser. Accordingly, measuring device 321 can generate a highly accurate and high-density three-dimensional model of the subject. Note that, here, the generated three-dimensional model is, for example, a three-dimensional model in the world coordinate system.

Measuring device 321 obtains a three-dimensional point cloud by line scan. Therefore, measuring device 321 obtains a plurality of three-dimensional points included in the three-dimensional point cloud at respective different times. That is, the measurement time by measuring device 321 and the shooting time by two cameras 310 are not synchronized. Measuring device 321 generates a three-dimensional point cloud that is dense in the horizontal direction and coarse in the vertical direction. That is, in the three-dimensional point cloud obtained by measuring device 321, the interval between vertically adjacent three-dimensional points is larger than the interval between horizontally adjacent three-dimensional points. In the three-dimensional point cloud generated by measuring device 321, the measurement time at which each three-dimensional point has been measured is associated with and given to the three-dimensional point.

Although the three-dimensional laser measuring device (LiDAR) that measures the distance to the subject by irradiating laser light is illustrated as measuring device 321, measuring device 321 is not limited to this, and may be a millimeter wave radar measuring device that measures the distance to the subject by emitting a millimeter wave.

Note that two cameras 310 illustrated in FIG. 10 may be a part of or all of cameras 310 included in camera group 300.

Next, the operation of sensor merging device 210 will be described using FIG. 11.

FIG. 11 is a flowchart illustrating an example of the operation of sensor merging device 210 according to Variation 1.

Sensor merging device 210 obtains stereo video and a time-series three-dimensional point cloud (S201). The stereo video includes a plurality of stereo images each generated in time series.

Sensor merging device 210 calculates the position and orientation of a sensor apparatus (S202). Specifically, sensor merging device 210 calculates the position and orientation of the sensor apparatus by using stereo images and three-dimensional points generated at the shooting times and the measurement times within a predetermined time difference in the stereo video and the three-dimensional point cloud obtained by the sensor apparatus. Note that the coordinates that serve as a reference for the position and orientation of the sensor apparatus may be the camera coordinate origin of a left eye camera of a stereo camera when using stereo video, may be the coordinates of the rotation center of measuring device 321 when using a time-series three-dimensional point cloud, or may be either one of the camera coordinate origin of the left eye camera or the coordinates of the rotation center of measuring device 321 when using the both.

For example, as illustrated in FIG. 12, the sensor apparatus may be moved to different positions at time t1 and time t2. FIG. 12 illustrates the positions of left eye camera 310 of the stereo camera at times t1, t2, and the position of measuring device 321 at time t1.

Then, as illustrated in FIG. 13, a camera image integration three-dimensional point cloud is generated that exists only at a characteristic location of the subject by using the stereo images shot at time t1 and time t2.

Additionally, as illustrated in FIG. 14, a time-series three-dimensional point cloud is generated that exists only at locations scanned by measuring device 321 by performing measurement by measuring device 321 from time t1 to time t2.

When sensor merging device 210 calculates the position and orientation of the sensor apparatus by using stereo video, the position and orientation of the sensor apparatus may be calculated by Visual SLAM (Simultaneous Localization and Mapping) based on the feature point matching between stereo images and time-series images.

Sensor merging device 210 integrates the time-series three-dimensional point cloud by using the calculated position and orientation (S203). The three-dimensional point cloud obtained by integration is called a LiDAR integration 3D point cloud.

Note that, in step S202, when calculating the position and orientation of the sensor apparatus by using the time-series three-dimensional point cloud, sensor merging device 210 may calculate the position and orientation of the sensor apparatus by, for example, NDT (Normal Distribution Transform) based on three-dimensional point cloud matching. Since the time-series three-dimensional point cloud is used, the position and orientation of the sensor apparatus can be calculated, and at the same time, the LiDAR integration 3D point cloud can be generated.

Additionally, a case will be described where, in step S202, sensor merging device 210 calculates the position and orientation of the sensor apparatus by using both the stereo video and the time-series three-dimensional point cloud. In this case, the camera parameters including the individual focal distances, lens distortions, and image centers of the left eye camera and a right eye camera of the stereo camera, and the relative positions and orientations of the left eye camera and the right eye camera are calculated in advance by, for example, a camera calibration method using a checker board. Then, sensor merging device 210 performs feature point matching between stereo images, also performs feature point matching between images that are left eye images continuous in time, and uses the coordinates of a matched feature point (matching point) in the images and the camera parameters to calculate the three-dimensional position of the matching point. Sensor merging device 210 performs this processing with an arbitrary number of frames, and generates a camera image integration three-dimensional point cloud.

Then, sensor merging device 210 performs, with a method that minimizes a cost function, alignment between the camera image integration three-dimensional point cloud and the time-series three-dimensional point cloud obtained by measuring device 321, and generates subject information (S204).

As indicated by Equation 2, the cost function consists of a weighted sum of two error functions.

$$\text{cost} = \text{E1} + \text{wxE2} \qquad\qquad (\text{Equation 2})$$

As illustrated in FIG. 15, a first error function E1 in the cost function is a reprojection error at the time of reprojecting each three-dimensional point of the camera image integration three-dimensional point cloud to the camera coordinates at two times. The camera parameters obtained in advance by the camera calibration are used for reprojection calculation. This error is calculated and summed for arbitrary three-dimensional points in an arbitrary time period.

A second error function E2 in the cost function is the result of calculating the distance to time-series three-dimensional points around measuring device 321, after converting each three-dimensional point of the camera integration three-dimensional point cloud to the coordinate system of the time-series three-dimensional point cloud generated by measuring device 321. Note that a transformation matrix between the two coordinate spaces may be calculated from the actual positional relationship between the left eye camera and measuring device 321.

This error is calculated and summed for three-dimensional points in the same time period as the error function E1.

Minimization processing of the cost function is performed by using, as variable parameters, the camera coordinates at two times, and each element of the transformation matrix from the camera coordinate system to the coordinate system of measuring device 321. Minimization may be performed with the least square method, the Gauss-Newton method, the Levenberg-Marquardt method, or the like.

Note that weight w may also be the ratio between the number of time-series three-dimensional points obtained by measuring device 321 and the number of three-dimensional points of the camera image integration three-dimensional point cloud.

A conversion equation for the time-series camera position-and-orientation, the camera coordinate system, and the measuring device coordinate system is determined by the minimization processing. Using this, the time-series three-dimensional point cloud is integrated, and the LiDAR integration three-dimensional point cloud is generated as the subject information.

Sensor merging device 210 outputs the generated subject information to three-dimensional model generation device 100.

In three-dimensional generation system 410 according to the present variation, the subject information is generated based on sensor information of two or more types. Accordingly, the subject information is generated based on two or more mutually different types of sensor information. In other words, subject information in which accuracy deterioration due to detection error has been reduced can be obtained.

Furthermore, in three-dimensional generation system 410, the sensor information of two or more types includes a plurality of two-dimensional images obtained from a stereo camera and three-dimensional data obtained from a measuring device that emits an electromagnetic wave and obtains a reflected wave which is the electromagnetic wave reflected by the subject.

Accordingly, since subject information is generated based on a plurality of two-dimensional images and three-dimensional data, three-dimensional generated by densification of three-dimensional data using the plurality of two-dimensional images can be accurately obtained.

[Variation 2]

Although, in three-dimensional model generation device 100 according the above-described embodiment, determiner 140 determines the search range used in a search for a plurality of similar points between a plurality of frames, based on the subject information (for example, the distance image) without using the map information, it is not limited to this. Determiner 140 may determine the search range by switching between a first method of determining the search range based on the distance image as described in the above-described embodiment, and a second method of determining the search range based on the map information, according to the distance between the subject and camera 310 that generates the first frame. For example, for each of pixels constituting the first distance image included in the first frame among a plurality of frames, when the distance indicated by the distance information included in the pixel is less than a predetermined distance (that is, when the subject and camera 310 that generates the first frame are close to each other), determiner 140 may determine the search range by using the first method, and when the distance between the subject and camera 310 that generates the first frame is the predetermined distance or more (that is, when the subject and cameras 310 are distant from each other), determiner 140 may determine the search range by using the second method. This is because, when the distances between the subject and cameras 310 are the predetermined distance or more, the accuracy of the map information becomes higher than the accuracy of the distance images of cameras 310.

Note that, in the second method, for example, determiner 140 generates three-dimensional information of the subject by interpolating a three-dimensional point at which the subject is estimated to exist between a plurality of three-dimensional points by using a plurality of three-dimensional points included in the map information, and determines the search range based on the generated three-dimensional information. Specifically, determiner 140 estimates a rough three-dimensional position on a subject front surface by filling (that is, interpolating) the spaces between three-dimensional points included in a sparse three-dimensional point cloud according to the map information with a plurality of planes, and generates an estimation result as an estimated three-dimensional model. For example, the spaces between three-dimensional points included in the sparse three-dimensional point cloud may be interpolated by meshing the three-dimensional points. Next, for each of pixels on a projection frame where the estimated three-dimensional model has been projected on the first frame, determiner 140 estimates the three-dimensional position that is on the basis of the first viewpoint from which the first frame has been shot, and that is on the subject and corresponds to the pixel. Accordingly, determiner 140 generates an estimated distance image including a plurality of pixels each including the estimated three-dimensional position. Then, similar to the first method, determiner 140 estimates the position of the first three-dimensional point based on the generated estimated distance image, and determines the search range based on the estimated position of the first three-dimensional point.

(Other embodiments)

Although the three-dimensional model generation method, etc., according to the present disclosure has been described based on the embodiments described above, the present disclosure is not limited to the foregoing embodiments.

For example, in the foregoing embodiments, each of the processing units included in the three-dimensional model generation device is described as being implemented by a CPU and a control program. For example, each of the structural components of these processing units may be configured of one or more electronic circuits. Each of the one or more electronic circuits may be a general-purpose circuit or a dedicated circuit. The one or more electronic circuits may include, for example, a semiconductor device, an integrated circuit (IC), or a large-scale integration (LSI), etc. The IC or LSI may be integrated in a single chip or several chips. Although referred to here as IC or LSI, the name may change depending on the scale of integration, and may be referred to as a system LSI, very large scale integration (VLSI), or ultra large scale integration (ULSI). Furthermore, a field programmable gate array (FPGA) that can be programmed after manufacturing of the LSI may be used for the same purpose.

Furthermore, general or specific aspects of the present disclosure may be implemented as a system, an apparatus, a method, an integrated circuit, or a computer program. Alternatively, the general or specific aspects of the present disclosure may be implemented as a non-transitory computer-readable recording medium, such as an optical disc, a hard disk drive (HDD), or a semiconductor memory, on which the computer program is recorded. Furthermore, the general or specific aspects of the present disclosure may be implemented as any combination of a system, an apparatus, a method, an integrated circuit, a computer program, and a recording medium.

The present disclosure also includes forms obtained by making various modifications to the above embodiments that can be conceived by those skilled in the art, as well as forms realized by combining structural components and functions in the embodiments, without departing from the essence of the present disclosure.

[Industrial Applicability]

The present disclosure can be applied to a three-dimensional model generation device or a three-dimensional model generation system, and can be applied to, for example, figure creation, topography or building structure recognition, human activity recognition, free-viewpoint video generation, or the like.

[Reference Signs List]

100 three-dimensional model generation device
110 receiver
120 storage
130 obtainer
140 determiner
150 generator
160 outputter
200 estimation device

210 sensor merging device
300 camera group
310, 311, 312, 313 camera
320 distance image sensor
321 measuring device
330 fixing component
400, 410 three-dimensional model generation system
500, 510, 513 subject
511, 512 point
520 map information
531 to 533, 581 frame
541 to 543 feature point
571 first frame
572, 583, 585 pixel
582, 584 epipolar line
D1, D2 shooting direction
D11 normal line direction
D12 direction
L1 straight line
L11, L12, L13 distance
R1, R2 search range
t1, t2 time
V1 first viewpoint
V2 second viewpoint

## Claims

1. A three-dimensional model generation method executed by an information processing device, the three-dimensional model generation method comprising:

   obtaining subject information including a plurality of positions on a subject in a three-dimensional space;
   obtaining a first camera image of the subject shot from a first viewpoint and a second camera image of the subject shot from a second viewpoint;
   determining a search range in the three-dimensional space, based on the subject information and without using map information, the search range including a first three-dimensional point on the subject, the first three-dimensional point corresponding to a first point in the first camera image, the map information being generated by camera calibration executed by causing one or more cameras to shoot the subject from a plurality of viewpoints including the first viewpoint and the second viewpoint, the map information including three-dimensional points each indicating a position on the subject in the three-dimensional space;
   performing matching for searching for a similar point that is similar to the first point, in a range in the second camera image, the range corresponding to the search range; and
   generating a three-dimensional model using a search result in the matching.

2. The three-dimensional model generation method according to claim 1, wherein
   in the matching, an epipolar line in the second camera image is limited to a length that is in accordance with the search range, and the similar point that is similar to the first point is searched for on the epipolar line in the second camera image, the epipolar line corresponding to the first point.

3. The three-dimensional model generation method according to claim 1 or claim 2, wherein

   the subject information includes a distance image generated according to measurement performed by a distance image sensor,
   the distance image includes a plurality of pixels each including distance information indicating distance from the distance image sensor to the subject, and
   in the determining, the search range is determined based on distance information included in a pixel, in the distance image, that corresponds to the first point.

4. The three-dimensional model generation method according to claim 1 or claim 2, wherein

the subject information includes a plurality of distance images each generated according to measurement by a corresponding one of a plurality of distance image sensors,

each of the plurality of distance images includes a plurality of pixels each including distance information indicating distance from the distance image sensor that generated the distance image to the subject,

the plurality of pixels included in each of the plurality of distance images are each associated with a corresponding one of a plurality of pixels included in, among a plurality of camera images, a camera image corresponding to the distance image,

the plurality of camera images include the first camera image and the second camera image, and

in the determining, the search range is determined based on one or more items of distance information included in one or more pixels in one or more distance images among the plurality of distance images, the one or more pixels each corresponding to the first point.

5. The three-dimensional model generation method according to claim 4, wherein

in the determining, when a detection accuracy of first distance information included in a pixel that is included in a first distance image and corresponds to the first point is lower than a predetermined accuracy, the search range is determined using, as the one or more items of distance information, third distance information corresponding to the first point, the first distance image corresponding to the first camera image, the third distance information being calculated using two or more camera images other than the first camera image.

6. The three-dimensional model generation method according to claim 4, wherein

a position and an orientation of each of the plurality of distance image sensors corresponds to a position and an orientation of a corresponding one of a plurality of cameras including the one or more cameras, and

the determining includes identifying, using positions and orientations of the plurality of cameras obtained through the camera calibration, the one or more pixels, in the one or more distance images, that each correspond to the first point.

7. The three-dimensional model generation method according to claim 6, wherein

the one or more distance images include a first distance image corresponding to the first camera image and a second distance image corresponding to the second camera image, and

the second camera image is determined from the plurality of camera images in feature point matching in the camera calibration, based on a total number of feature points between the first camera image and each of the plurality of camera images other than the first camera image.

8. The three-dimensional model generation method according to claim 6 or claim 7, wherein
the second camera image is determined based on a difference in shooting orientation calculated from a first position-and-orientation of a camera that shot the first camera image at a time the first camera image was shot and a second position-and-orientation of a camera that shot the second camera image at a time the second camera image was shot.

9. The three-dimensional model generation method according to any one of claims 6 to 8, wherein
the second camera image is determined based on a difference in shooting position calculated from a first position-and-orientation of a camera that shot the first camera image at a time the first camera image was shot and a second position-and-orientation of a camera that shot the second camera image at a time the second camera image was shot.

10. The three-dimensional model generation method according to any one of claims 6 to 9, wherein
a difference between a maximum value and a minimum value of the one or more items of distance information is less than a first value.

11. The three-dimensional model generation method according to any one of claims 5 to 10, wherein
in the determining, the search range is set to be wider as an accuracy of the one or more items of distance information is lower.

12. The three-dimensional model generation method according to claim 11, wherein
the accuracy is higher as a total number of the one or more items of distance information is higher.

**13.** The three-dimensional model generation method according to claim 11, wherein
the accuracy is higher as a dispersion of the one or more items of distance information is smaller.

**14.** The three-dimensional model generation method according to claim 1 or claim 2, wherein
the subject information is generated based on sensor information of two or more types.

**15.** The three-dimensional model generation method according to claim 14, wherein
the sensor information of two or more types includes a plurality of two-dimensional images obtained from a stereo camera and three-dimensional data obtained from a measuring device that emits an electromagnetic wave and obtains a reflected wave which is the electromagnetic wave reflected by the subject.

**16.** A three-dimensional model generation device comprising:

a processor; and
memory, wherein
using the memory, the processor:

obtains subject information including a plurality of positions on a subject in a three-dimensional space;
obtains a first camera image of the subject shot from a first viewpoint and a second camera image of the subject shot from a second viewpoint;
determines a search range on the three-dimensional space, based on the subject information and without using map information, the search range including a first three-dimensional point on the subject, the first three-dimensional point corresponding to a first point in the first camera image, the map information being generated by camera calibration executed by causing one or more cameras to shoot the subject from a plurality of viewpoints, the map information including three-dimensional points each indicating a position on the subject in the three-dimensional space;
performs matching for searching for a similar point that is similar to the first point, in a range in the second camera image which corresponds to the search range; and
generates a three-dimensional model using a search result in the matching.

**17.** A three-dimensional model generation device comprising:

memory; and
a processor coupled to the memory, wherein
the processor:

obtains a first camera image generated by shooting a subject in a three-dimensional space from a first viewpoint and a second camera image generated by shooting the subject from a second viewpoint;
searches for a second point in a search range on an epipolar line identified by projecting, on the second camera image, a straight line that passes through the first viewpoint and a first point in the first camera image, the second point being similar to the first point; and
generates a three-dimensional model of the subject based on a result of the search,

the search range is provided based on a position of a first three-dimensional point, in the three-dimensional space, that corresponds to the first point, and
the position is calculated based on a reflected wave of an electromagnetic wave emitted toward the subject.

**18.** The three-dimensional model generation device according to claim 17, wherein
the position is calculated based on a distance image generated by a sensor that receives the reflected wave.

# FIG. 1

500

310

310

310

310

310

# FIG. 2

Three-dimensional model generation system 400

300

Camera 310
Distance image sensor 320

Camera 310
Distance image sensor 320

Estimation device 200

Three-dimensional model generation device 100

Receiver 110

Storage 120

Obtainer 130

Determiner 140

Generator 150

Outputter 160

# FIG. 3

Feature point matching

Feature point matching

## FIG. 4A

## FIG. 4B

# FIG. 4C

# FIG. 4D

FIG. 4E

## FIG. 5A

513

513

513

Detection result having high accuracy

Detection result having low accuracy

312

## FIG. 5B

513

513

513

311

312

313

Detection result having high accuracy
Interpolated result

# FIG. 6

# FIG. 7

# FIG. 8

```
           ┌──────────────┐
           │    Start     │
           └──────┬───────┘
                  │            S101
                  ▼
    ┌─────────────────────────────┐
    │      Receive frames and     │
    │      camera parameters      │
    └─────────────┬───────────────┘
                  │            S102
                  ▼
    ┌─────────────────────────────┐
    │    Store frames and camera  │
    │    parameters in storage    │
    └─────────────┬───────────────┘
                  │            S103
                  ▼
    ┌─────────────────────────────┐
    │  Obtain stored subject information │
    └─────────────┬───────────────┘
                  │            S104
                  ▼
    ┌─────────────────────────────┐
    │    Determine search range   │
    └─────────────┬───────────────┘
                  │            S105
                  ▼
    ┌─────────────────────────────┐
    │     Search for similar point│
    │     by using search range   │
    └─────────────┬───────────────┘
                  │            S106
                  ▼
    ┌─────────────────────────────┐
    │  Generate three-dimensional │
    │  model by using search result │
    └─────────────┬───────────────┘
                  │            S107
                  ▼
    ┌─────────────────────────────┐
    │  Output generated three-dimensional │
    │  model                      │
    └─────────────┬───────────────┘
                  │
                  ▼
           ┌──────────────┐
           │     End      │
           └──────────────┘
```

# FIG. 9

## FIG. 10

# FIG. 11

Start

↓ S201

Obtain stereo image and time-series three-dimensional point cloud

↓ S202

Calculate time-series position and orientation of sensor

↓ S203

Integrate time-series three-dimensional point cloud

↓ S204

Generate subject information

↓

End

# FIG. 12

510

310

Time t2

310

Time t1

321

Time t1

# FIG. 13

510

Three-dimensional
point exists only at
characteristic location

310

Time t2

310

Time t1

Coordinate space of camera image
integration three-dimensional point cloud

FIG. 14

510

Three-dimensional point exists
only at location scanned by
measuring device

321

Coordinate space of time-series
three-dimensional point cloud

Time t1

# FIG. 15

Coordinate space of camera image integration three-dimensional point cloud

- 510
- Project camera image integration three-dimensional point onto coordinate system of time-series three-dimensional point
- Reproject three-dimensional point onto camera image
- 310 — Time t2
- 310 — Time t1

Coordinate space of time-series three-dimensional point cloud

- 510
- 321 — Time t1

## INTERNATIONAL SEARCH REPORT

| International application No. |
|---|
| **PCT/JP2022/025296** |

**A.    CLASSIFICATION OF SUBJECT MATTER**

*G06T 7/00*(2017.01)i; *G06T 7/593*(2017.01)i
FI:    G06T7/593; G06T7/00 300D

According to International Patent Classification (IPC) or to both national classification and IPC

**B.    FIELDS SEARCHED**

Minimum documentation searched (classification system followed by classification symbols)

G06T7/00; G06T7/593

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2021/193672 A1 (PANASONIC IP MAN CO LTD  ) 30 September 2021 (2021-09-30) paragraphs [0035]-[0123], [0139], fig. 1-10, 13 | 1-18 |
| A | JP 2015-33047 A (KDDI CORP) 16 February 2015 (2015-02-16) paragraphs [0013]-[0036], fig. 1-8 | 1-18 |
| A | JP 2019-220099 A (TOPPAN PRINTING CO LTD) 26 December 2019 (2019-12-26) paragraphs [0030]-[0051], fig. 1-4 | 1-18 |
| A | JP 2020-8502 A (4D EYES CO LTD) 16 January 2020 (2020-01-16) entire text, all drawings | 1-18 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 August 2022** | **06 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/025296**

| Patent document cited in search report | | | Publication date (day/month/year) | Patent family member(s) | Publication date (day/month/year) |
|---|---|---|---|---|---|
| WO | 2021/193672 | A1 | 30 September 2021 | (Family: none) | |
| JP | 2015-33047 | A | 16 February 2015 | (Family: none) | |
| JP | 2019-220099 | A | 26 December 2019 | (Family: none) | |
| JP | 2020-8502 | A | 16 January 2020 | (Family: none) | |

Form PCT/ISA/210 (patent family annex) (January 2015)

**EP 4 443 383 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017130146 A